# EUROPEAN PATENT APPLICATION

(11) **EP 4 683 375 A1**
(43) Date of publication of application: **21.01.2026**
(21) Application number: 24189189.4
(22) Date of filing: 17.07.2024
(51) Int. Cl.: H04W 24/10

(54) **USER EQUIPMENT AND BASE STATION**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a user equipment, UE, comprising the following. A transceiver of the UE, which in operation, receives one or more signals conveying configuration information for configuring a measurement gap skipping time period, wherein the measurement gap skipping time period is useable for determining occasions of skipping a measurement gap. A circuitry of the UE, which in operation, adapts the configured measurement gap skipping time period to be aligned relative to an alignment boundary. Further, it is provided a base station and a method performed by the UE.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand broad bandwidth, while they are different in that the URLLC service may preferably require ultra-low latencies.

A second objective is to achieve forward compatibility, which facilitates a completely new system design and/or the introduction of novel features.

### Summary

One non-limiting and exemplary embodiment facilitates providing procedures for a UE to perform improved data transmission and reception procedures.

In an embodiment, the techniques disclosed here feature a user equipment, UE, comprising the following. A transceiver of the UE receives one or more signals conveying configuration information for configuring a measurement gap skipping time period, wherein the measurement gap skipping time period is useable for determining occasions of skipping a measurement gap. A processing circuitry of the UE adapts the configured measurement gap skipping time period to be aligned relative to an alignment boundary.

In another embodiment, the techniques disclosed here feature a base station, comprising the following. A processing circuitry of the base station generates configuration information for configuring a measurement gap skipping time period, wherein the measurement gap skipping time period is useable for determining occasions of skipping a measurement gap, and adapts the configured measurement gap skipping time period to be aligned relative to an alignment boundary. A transceiver of the base station transmits one or more signals conveying the configuration information.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### Brief description of the Figures

In the following exemplary embodiments are described in more detail with reference to the attached figures and drawings.
- **Fig. 1**: shows an exemplary architecture for a 3GPP NR system to which the exemplary embodiments of the present disclosure may be applied;
- **Fig. 2**: illustrates the arrival of video frame data and a configured measurement gap pattern,
- **Fig. 3**: illustrates a possible misalignment between the arrival of video frame data and a configured pattern of measurement gap skipping time periods,
- **Fig. 4**: illustrates a possible misalignment between a configured measurement gap skipping time period and boundaries of a time resource unit,
- **Fig. 5**: illustrates a possible misalignment between a configured measurement gap skipping time period and boundaries defined by a scheduling configuration,
- **Fig. 6**: illustrates an exemplary and simplified structure of a user equipment (UE) and a base station,
- **Fig. 7**: illustrates a functional structure of the circuitries pertaining to the UE,
- **Fig. 8**: illustrates a functional structure of the circuitries pertaining to the base station,
- **Fig. 9**: illustrates an exemplary and simplified flow diagram for the UE behavior according to an exemplary implementation of the present disclosure,
- **Fig. 10**: illustrates an exemplary and simplified flow diagram for the base station behavior according to an exemplary implementation of the present disclosure,
- **Fig. 11**: illustrates a first exemplary implementation of a time period alignment procedure according to a first solution;
- **Fig. 12**: illustrates a second exemplary implementation of the time period alignment procedure according to the first solution;
- **Fig. 13**: illustrates a third exemplary implementation of the time period alignment procedure according to the first solution;
- **Fig. 14**: illustrates an exemplary implementation of the time period alignment procedure according to a second solution;
- **Fig. 15**: illustrates a first exemplary implementation of time period alignment procedure according to a third solution;
- **Fig. 16**: illustrates a second exemplary implementation of the time period alignment procedure according to the third solution;
- **Fig. 17**: illustrates an exemplary implementation time period alignment procedure according to a fourth solution;
- **Fig. 18**: shows exemplary functional split options in 5G open-radio access network (O-RAN).

### DETAILED DESCRIPTION

### 5G NR system architecture and protocol stacks

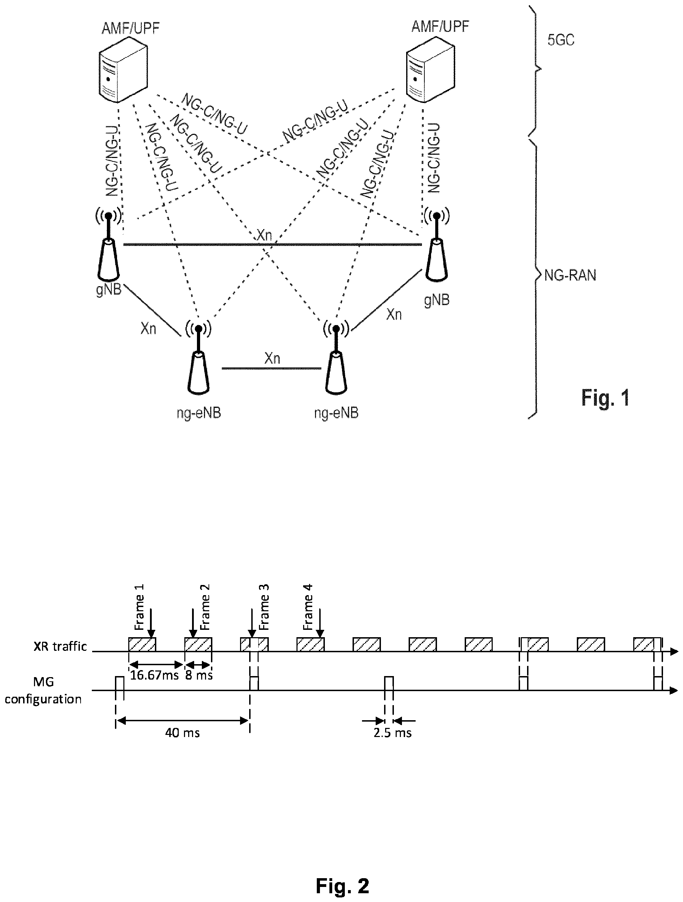

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gN Bs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

### XR - extended Reality in Rel. 18

A 3GPP study item relates to extended Reality (XR) in RAN 1 and RAN 2. The aim is to provide efficient communications for augmented reality (AR), virtual reality (VR), mixed reality (MR) and cloud gaming, while reducing the power consumption and increasing the system capacity. In particular, techniques are studied for XR (eXtended Reality), e.g. to accommodate XR service characteristics, such as periodicity, multiple flows, jitter, latency, reliability, etc. The considered XR applications require a high data rate in downlink (DL) and uplink (UL) with a relatively strict packet delay budget (PDB).

Furthermore, some of the XR applications run on devices with a limited source of energy, such as wearable glasses or handheld devices. Thus, energy efficiency is an important concern.

The XR applications impose a variety of data traffics, including video streams and pose/control traffics. The video frames are quite large with varying sizes. They are characterized as quasi-periodic, because video frames arrive over a jitter window. In addition, the periodicity of the jitter window is non-integer regarding time resource units like radio frames/slots/symbols.
- Packet size: For a high-quality video stream, the frame size would be around 1M bits after compression for an 8K video. This leads to having large size packets.
- Varying size: The frame sizes could vary e.g. due to the I-frame or P-frame/B-frame.
- Periodicities: A video stream generally generates 60/90/120 fps, which correspond to the periodicity of 16.667, 11.111, and 8.333 ms, respectively.
- Jitter: The frame packets would arrive at the gNB/UE over a time window of e.g. [-4, 4] ms or even a larger time window.
- Delay budget: The delay budget for delivering the XR packets could be tight, for instance, 10ms for AR/VR and 15ms for cloud gaming.

### Discontinued Reception, DRX, in LTE and 5G NR

To reduce the battery consumption in the UE, a mechanism is used to minimize the time the UE spends monitoring the PDCCH, which is called the Discontinuous Reception (DRX) functionality. UE side DRX is defined in 3GPP, e.g. in 3GPP Technical Standard TS 36.321, 17.5.0, chapter 5.7, as well as in 3GPP TS 38.331 v17.5.0 (see e.g. *DRX-Config* Information Element in section 6.3.2).

DRX reduces the battery consumption of UEs by allowing them to periodically turn off their receivers for specified intervals. This intermittent receive strategy saves energy, especially in scenarios where the device may not have continuous data to receive.

Specifically, the DRX cycle is divided into two main periods: an On Duration and an Off Duration. During the On Duration, the UE's receiver is active, monitoring the channel for incoming data or control signals. In contrast, during the Off Duration, the receiver is turned off to conserve power.

DRX parameters can be configured by the base station to optimize power consumption and latency for specific use cases and network conditions. These parameters indicate the length of the on and off durations, the start timing of the DRX cycles, and the type of DRX pattern (e.g., short DRX, and long DRX).

DRX can be triggered by various events, such as a lack of data to receive, explicit commands from the network, or timers set by the UE itself. For example, if the UE has no data to transmit or receive for a certain period of time, it may enter a DRX state to save power.

While DRX helps to save power, it can also introduce latency, especially if the UE has to wait until the next on duration to receive data. Therefore, DRX parameters must be carefully configured to balance power efficiency with acceptable levels of latency and throughput.

In NR 5G, DRX mechanisms can dynamically adapt to changing network conditions and traffic patterns. For example, during periods of high network activity, such as receiving a video stream with periodically received frames, DRX parameters can be adjusted to minimize latency and maximize throughput, while during idle periods, they can be optimized for power savings.

To better support traffic in XR applications, 3GPP introduced in Rel. 19 new sets of non-integer values for determining the start timing of the DRX cycles, which are defined in 3GPP Technical Standard TS 38.331, version 18.2.0, Chapter 6,3,2. For example, the start timing of the DRX cycles may be indicated with a parameter *drx-NonIntegerLongcycleStartOffset-r18* for long DRX or a parameter *drx-NonIntegerShortCycle-r18* for short DRX. The two parameters may take for example values of *ms25over3* indicating 3 DRX cycles per 25 milliseconds that corresponds to a periodicity of 8,333 ms, *ms100over9* indicating 9 DRX cycles per 100 milliseconds that corresponds to a periodicity of 11,111 ms, or *ms50over3* indicating 3 DRX cycles per 50 milliseconds that corresponds to a periodicity of 16,667 ms. But also other parameter values for indicating different non-integer periodicities are defined or may be defined in the future.

With the introduced non-integer value periodicity, the starting point of a DRX cycle is adjusted to correspond to the earliest slot using a floor function, which is defined in 3GPP, e.g. in 3GPP Technical Standard TS 38.321, version 18.2.0, Chapter 5.7.

### Measurement gap (MG)

3GPP has supports measurement gaps (which sometimes are also referred to as "measurement restrictions"). The MG is configured for the UE to perform measurements when the UE cannot simultaneously measure the target carrier frequency while transmitting/receiving on the serving cell. In other words, the MG refers to a period of time during which the device's receiver is temporarily inactive for receiving transmissions in the serving cell, but is instead turned to perform radio measurements, in particular radio resource management (RRM) measurements, in a target carrier. The MG gap allows the device to perform various measurements without interfering with ongoing transmissions. The measurement procedure is defined in 3GPP, e.g. in 3GPP Technical Standard TS 38.133, version 18.4.0, Chapter 9.

The need for a MG in NR depends on the capability of the UE, the active BWP of the UE and the current operating frequency. In NR, MGs may be configured for performing intra-frequency, inter-frequency and inter-RAT measurements.

The UEs shall support the MG patterns listed in the following table 1:

**Table 1**

| **MG Pattern Id** | **Measurement Gap Length (MGL, ms)** | **Measurement Gap Repetition Period (MGRP, ms)** |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |
| 24 | 10 | 80 |
| 25 | 20 | 160 |

The UE determines the MG timing based on the gap offset configuration and the MG timing advance configuration provided by higher layer signaling. The gap offset is defined as the offset of the gap pattern. There are about 160 offset values, but all values are not applicable for all periodicities. The offset values point to the starting subframe within the period, its value range is from 0 to MGRP-1. For example, if the periodicity is 20 ms, the offset ranges from 0 to 19. If the MG timing advance (Mgta) is configured, the UE starts the measurement Mgta ms before the gap subframe occurrence i.e., the MG starts at time Mgta ms advanced to the end of the latest subframe occurring immediately before the MG. The amount of timing advance can be 0.25 ms (FR2) or 0.5 ms (FR1).

In NR, an RF re-tuning time is applied. There are various bands below 6 GHz in 4G LTE networks. In NR, frequency range 1 (FR1) overlaps and extends 4G LTE frequencies, including various bands from 450 MHz to 6,000 MHz, which is commonly referred to as NR sub-6 GHz. NR further includes a frequency range 2 (FR2) covering from 24,250 MHz to 52,600 MHz, which is commonly referred to as mm-Wave, even though the millimeter wave frequency may start at 30 GHz strictly speaking. For example, the re-tuning time is 0.5 ms for carrier frequency measurements in the FR1 range and 0.25 ms in the FR2 range. For example, a gap length of 4 ms for FR1 measurements would allow 3 ms for actual measurements and a gap length of 3.5 ms for FR2 measurements would allow 3 ms for actual measurements.

The applicability of the MG patterns is further specified (see e.g. Tables 9.1.2-2 and 9.1.2-2 of 3GPP Technical Standard TS 38.133, e.g. version 18.4.0). In particular, NR defines two types of MG, i.e., per-UE and per-FR. The per-UE gap (gapUE) is applied to both FR1 and FR2 frequencies. For the per-FR gap, two independent gap patterns are defined for FR1 (gapFR1) and FR2 (gapFR2). If the gapUE is configured, neither of gapFR1 nor gapFR2 can be configured. The MeasGapConfig IE specifies the MG configuration and controls setup/release of MG by RRC.

Typically, the UE measures reference signals (RS), which are described in more detail below.

During the MG, the MAC entity is not required to perform the following (see e.g. section 9.1.2 of 3GPP TR 38.133, e.g. version 18.4.0).
- Send HARQ feedback, SR, and CSI
- Report SRS
- Transmit on UL-SCH except for Msg3
- Receive DL-SCH
- Monitor the PDCCH except the UE is waiting for Msg2 or Msg4 during RA procedure.

Such restrictions could introduce additional delay and affect the communication performance.

### Reference Signals

Several different types of reference signals (RS) are used for 5G NR (see 3GPP TS 38.211 v17.4.0 section 7.4.1). These reference signals may be used during in the MG. At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see TS 38.214)
- RIM reference signals
- Positioning reference signals

### Measurement gap skipping

As presented above, in particular for XR applications, a data stream (e.g., a video stream or an audio stream) may comprise a plurality of media frames, where each of the media frames is quite large. The data stream traffic can be characterized as quasi-periodic, where each of a plurality of media frames arrives over a jitter window. The jitter window during which each of the media frames arrives, is defined by a frame rate of frames per second (fps).

This situation is illustrated in **Fig. 2****.** For ease of illustration and understanding, exemplary assumptions are made as follows. A video stream of 60 fps is assumed, so that a video frame (also called a media frame) is generated every 1/60 s, which is approximately 16.6667 ms. The video frames are generated with a jitter window of 8 ms.

As discussed above, the UE is configured with measurement gaps. For ease of illustration and understanding, exemplary assumptions are made as follows. A measurement gap is configured with a periodicity of 40 ms, a measurement gap length of 1.5 ms and an RF re-tuning time of 0.5 ms before and after the measurement gap, resulting in a duration of each MG of 2.5 ms.

As exemplary illustrated in **Fig. 2** for frame 3, due to the difference between the periodicities of the video stream and the configured MG pattern, a measurement gap included in the configured MG pattern might collide with the XR traffic, which imposes the delay before the data can be scheduled. This causes an additional delay in the delivery of the video frame. A similar limitation applies to uplink (UL) data transmissions. In addition, the delay can be increased when DRX functionality is enabled.

To address this issue, 3GPP considered enhancements in Rel. 19 to enable the identified enhancements with RRM performance impact taken into consideration by specifying corresponding measurement gap and scheduling restrictions. In this respect, it was agreed to consider solutions for measurement gap skipping to enable UEs to transmit or receive transmissions in measurement gaps, e.g. caused by RRM measurements. It was further agreed that the considered solutions should be based on one or combinations of dynamic indication or semi-static indication/configuration.

A dynamic indication, for example, may be used to explicitly indicate to a UE a time window (which in the following is also signified as "measurement gap skipping time period"), defining a time period where to skip one or more measurement gap(s), by a downlink control information (DCI) message.

In addition or as an alternative, a semi-static indication may be used to configure a pattern of time windows (or "measurement gap skipping time periods") via higher layer signaling, in particular via RRC signaling, to indicate to a UE occasions, where to skip one or more measurement gap(s).

### Further Improvements

The inventors have identified problems, which may occur when configuring/indicating time periods, like the measurement gap skipping time period, to be used by the UE for determining occasions, where to skip one or more measurement gap(s), with non-integer periodicities, non-integer durations and non-integer time offsets (between the time periods).

As described above, occasions for skipping a measurement gap could be determined by using one or more time window(s) as measurement gap skipping time period(s), which are indicated to a UE dynamically, semi-persistently, and/or semi-statically. To align the measurement gap skipping time period(s) with the periodicity of XR traffic, the periodicity of measurement gap skipping time periods included in a pattern could be non-integer. But, due to limited computation accuracy or in order to avoid computation complexity, there may occur small differences between the periodicity of the XR traffic jitter windows and the periodicity of the (semi-statically configured or dynamically indicated) measurement gap skipping time periods, so that a drifting of the measurement gap skipping time period with respect to the overlapping XR traffic jitter windows could occur. Furthermore, due to the non-integer periodicity of the measurement gap skipping time periods, there may occur differences between the periodicity of the measurement gap skipping time periods and the configured measurement gaps (or MG occasions), so that a configured measurement gap (or a configured MG occasions) could partially overlap with (configured or dynamically indicated) a measurement gap skipping time periods.

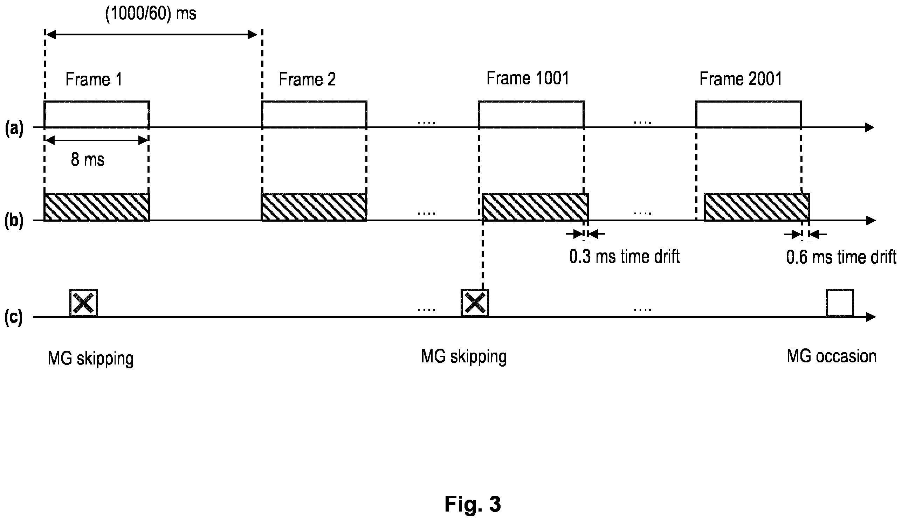

This is exemplary illustrated in **Fig. 3****,** where a UE is receiving a video stream as a XR traffic (see row (a) in Fig. 3) in downlink with the rate of 60 fps, which corresponds to the XR traffic jitter windows periodicity of 1000/60ms (i.e. 60 XR traffic jitter windows occur per 1000ms). In addition the video frames arrive over jitter windows of 8 ms, so that a duration of the XR traffic jitter windows is 8 ms.

The UE is configured semi-statically with a pattern of measurement gap skipping time periods having a periodicity of 16,667 ms, (i.e. a measurement gap skipping time period is configured every 16,667 ms) and a duration of 8 ms (see row (b)). With this configuration, for example a drift of 0,3 ms occurs between the XR traffic jitter window and the measurement gap skipping time periods occurs every 1000 XR traffic jitter windows (see e.g. frame 1001 and 2001 in Fig. 3). As a consequence, the measurement gap skipping time periods drift over time and do not align with the XR traffic jitter windows well anymore.

Furthermore, the UE is also configured with a pattern of measurement gaps (see row (c) in Fig. 3) having a periodicity of 40 ms (i.e. a MG is configured every 40 ms) and a duration (gap length) of 2.5 ms (i.e 1.5 ms for for actual measurements +1 ms for RF re-tuning). Accordingly, configured MGs may overlap only partially with configured measurement gap skipping time periods (see e.g. for frame 1001), while the complete MG occasion may be skipped in this case.

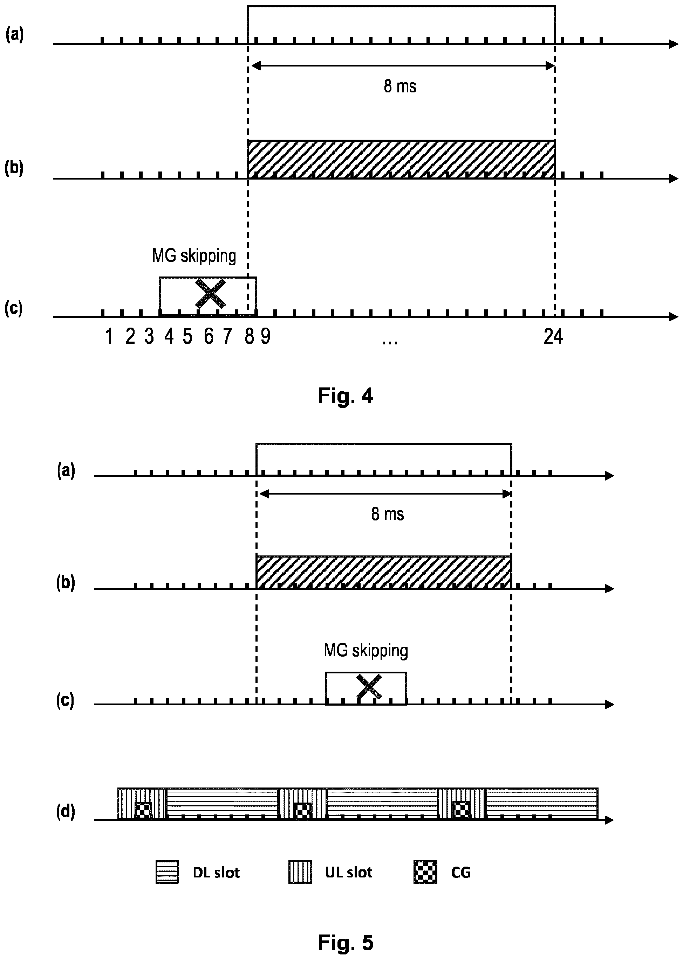

As another consequence of using the non-integer values for the periodicity (and/or for the duration) of the measurement gap skipping time period, there may occur a misalignment of the configured/indicated measurement gap skipping time period and the (boundaries of) time resource units used for data transmission (or reception). In an example illustrated in **Fig. 4****,** the measurement gap skipping time period is aligned with the XR traffic jitter window to indicate which MG occasions are to be skipped (see row (a) and (b) of Fig. 4). The UE skips a MG occasion when it collides with a configured measurement gap skipping time period in time. As illustrated in **Fig. 4****,** the measurement gap skipping time period begins during slot 8. In case, the XR traffic arrives at the beginning of the XR traffic jitter window, the base station (gNB) can only schedule the transmission earliest in the next slot, i.e., slot 9. Hence, there is no benefit from skipping the partially overlapping (or colliding) MG occasion (see row (c) of Fig. 4), which overlaps (or collides) with the measurement gap skipping time period in slot 8.

Furthermore, while the measurement gap skipping time period(s) could be configured/indicated to facilitate both uplink (UL) and downlink (DL) transmissions, the measurement gap skipping time period(s) may be configured only for one of UL and DL transmissions. For example, as illustrated in **Fig. 5****,** a UE may carry UL XR traffic. Here, the UE is configured with a configured grant (CG) configuration with a periodicity of 5 ms (see row (d) of Fig. 5). In addition, a measurement gap skipping time period is configured semi-statically (or dynamically) to indicate which MG occasions are to be skipped (see row (b) of Fig. 5). The configured measurement gap skipping time period overlaps with a MG occasion, which leads to skipping the MG occasion (see row (c) of Fig. 5).

However, there is no CG resource when the MG occasion is skipped, so that the MG skipping in this particular condition does not help in reducing the UL latency.

The inventors have therefore identified the possibility of providing improved time period alignment procedures to facilitate avoiding one or more of the disadvantages described above. The present invention relates to various solutions and variants for such improved transmission methods.

### Embodiments

In the following, communication devices which may be UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

As used herein, the term **"measurement gap"** or "MG" refers to a time domain opportunity provided for the UE to perform measurements on, for example, reference signals. The network may configure a UE with a plurality of MGs, e.g. via RRC signaling, thereby configuring a MG pattern. The network may configure these MGs so that they do not coincide with UE transmissions or receptions. A UE may be configured with multiple MGs.

The term **"measurement gap skipping time period"** as used herein may relate to a periodically scheduled or dynamically indicated time window, which allows a UE to determine occasions for skipping one or more measurement gap(s), e.g. included in a configured MG pattern. In this respect, the term **"skipping"** can be understood, for example, as the act of not taking advantage of an opportunity. In other words, if the UE skips a MG (or an opportunity to perform a MG), the UE does not use a MG (occasion) determined from the configured MG pattern to perform measurements in a target carrier, but the UE may instead transmit or receive transmissions in the serving cell. The measurement gap skipping time period may be configured by semi-static signaling or dynamic signaling and may be configured as a singular measurement gap skipping time period, as a part of a plurality of configured measurement gap skipping time period having different parameters or included in a pattern of a plurality of measurement gap skipping time period being configured with the same parameters.

The measurement gap skipping time period may be defined by at least one parameter associated with any of the following: a starting point of the measurement gap skipping time period, an ending point of the measurement gap skipping time period, a duration of the measurement gap skipping time period (i.e. a time difference between the starting point and the ending point of the measurement gap skipping time period), a time difference (or offset time) between starting points of two consecutive measurement gap skipping time period, a time difference between an ending point of a measurement gap skipping time period and a starting points of the next consecutive measurement gap skipping time period.

Configuration information for configuring a measurement gap skipping time period or a pattern of a plurality of measurement gap skipping time periods may include information for allowing the UE to determine the parameters of a single configured measurement gap skipping time period or of a pattern of a plurality of configured measurement gap skipping time periods.

For configuring a measurement gap skipping time period with individual parameters, the configuration information may indicate a starting point of the measurement gap skipping time period, for example an offset time between the reception time of the configuration information and the starting point of the measurement gap skipping time period, and a duration (or an ending point) of the measurement gap skipping time period. For example, the offset time between the reception time of the configuration information and the starting point of the measurement gap skipping time period could be included as an explicit parameter in the configuration information or could be a pre-defined value.

For configuring a pattern of a plurality of measurement gap skipping time periods, the configuration information may indicate a starting point of the pattern, for example an offset time between the reception time of the configuration information and the starting point of the pattern, a duration of the plurality measurement gap skipping time periods included in the pattern and a time difference between starting points of two consecutive measurement gap skipping time periods. The duration of the plurality measurement gap skipping time periods and the time difference between starting points of two consecutive measurement gap skipping time periods may be applicable for all of the plurality of measurement gap skipping time periods included in the pattern. For example, the offset time between the reception time of the configuration information and the starting point of the measurement gap skipping time period could be included as an explicit parameter in the configuration information or could be a pre-defined value. Alternatively, the configuration information may include a bitmap to indicate the above-mentioned parameter of the plurality of measurement gap skipping time periods included in the pattern.

The term **"adapt a time period"** refers to a process of adjusting (changing) or re-configuring at least one parameter of a set of parameters defined by a configuration of said time period, but should be distinguished from re-configuring all the parameters defined by the configuration of said time period, which for example may occur, when new configuration information is received. For example, a configured measurement gap skipping time period may be adapted (or adjusted) by one or more of shifting a starting point, which is determined from the configuration of the measurement gap skipping time period (or the respective pattern), shifting an ending point of the measurement gap skipping time period, which is determined from the configuration of the measurement gap skipping time period (or the respective pattern), a duration of the measurement gap skipping time period, which is determined from the configuration of the measurement gap skipping time period (or the respective pattern), changing a time difference between starting points of two consecutive measurement gap skipping time period, which is determined from the configuration of the measurement gap skipping time period (or the respective pattern), or changing a time difference between an ending point of a measurement gap skipping time period and a starting points of the next consecutive measurement gap skipping time period, which is determined from the configuration of the measurement gap skipping time period (or the respective pattern).

The term **"overlap"** as used here can be understood as an overlap in time or as a collision in time. Two scheduled events, e.g. the MG and the measurement gap skipping time period or the XR traffic jitter window and the measurement gap skipping time period, overlap in time if two or more activities are scheduled to take place simultaneously or in partially overlapping time periods. Especially, two scheduled events overlap in time if two or more activities are scheduled to take place in a same time resource unit.

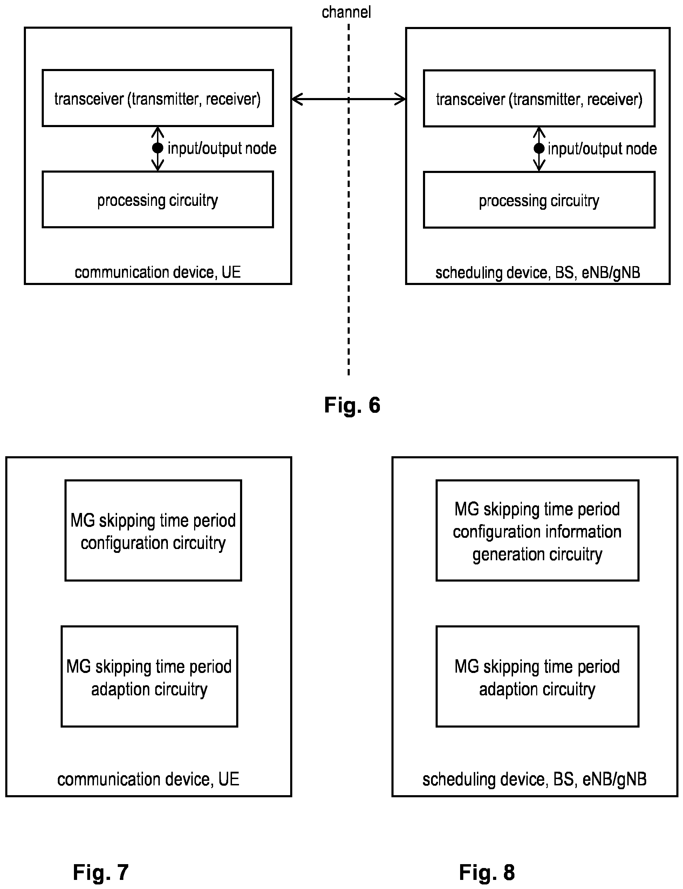

**Fig. 6** illustrates a general, simplified and exemplary block diagram of a UE (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved time period alignment procedures will be described in the following, which facilitate for a UE to perform improved time period alignment procedures. In said connection, improved UEs, improved base stations and improved integrated circuits are presented, which participate separately or together in the improved transmission procedures. Corresponding methods for the UE behavior and the base station behavior are provided as well. The integrated circuits may correspond to the UE and base station, and respectively their behavior.

The present solutions of the improved time period alignment procedures can be based on some or a combination of the different mechanisms described above in context of the exemplary 3GPP 5G-NR implementations, including e.g. the use of the signaling mechanisms (e.g. for configuring measurement gaps) or details on the implementation scenarios (see XR) as currently discussed in 3GPP.

**Fig. 7** illustrates a simplified and exemplary UE structure according to an exemplary implementation of the improved time period alignment procedure, which can be implemented based on the general UE structure explained in connection with Fig. 6. The various structural elements of the UE illustrated in said Fig. 7 can be interconnected between one another e.g., with corresponding input/output nodes (not shown) e.g., in order to exchange control and user data and other signals. Although not shown for illustration purposes, the UE may include further structural elements.

As apparent from Fig. 7, the UE may include MG skipping time period configuration circuitry and MG skipping time period adaption circuitry.

In the present case as will become apparent from the below disclosure, the processing circuitry of the UE can thus be exemplarily configured to at least partly perform one or more of configuring a measurement gap skipping time period, which is useable for determining occasions of skipping a measurement gap, adapt the configured measurement gap skipping time period, etc.

In the present case as will become apparent from the below disclosure, the transceiver of the UE can thus be exemplarily configured to at least partly perform one or more of receiving one or more signals conveying configuration information, etc.

One exemplary procedure as will be disclosed in more detail further below is implemented by a UE that includes the following. A transceiver of the UE, in operation, (is configured to) receives one or more signals conveying configuration information for configuring a measurement gap skipping time period, wherein the measurement gap skipping time period is useable for determining occasions of skipping a measurement gap. A processing circuitry of the UE, in operation, (is configured to) adapts the configured measurement gap skipping time period to be aligned relative to an alignment boundary.

The processing circuitry of the UE may implement more functionality than the above-mentioned adapting the configured measurement gap skipping time period, as it may, for instance, further determine the configured measurement gap skipping time period from the received configuration information and may control the transceiver to transmit or receive control signaling and/or to receive or transmit data.

Further, the processing circuitry may control skipping of a measurement gap, MG, which is configured during the adapted measurement gap skipping time period. In a first alternative implementation, the processing circuitry may skip a complete measurement gap, which at least partially overlaps in time or which completely overlaps in time with the adapted measurement gap skipping time period. In this alternative implementation, the processing circuitry skips a MG (or an opportunity to perform a MG) completely, so that the UE does not use a MG (occasion) determined from the configured MG pattern to perform (RRM) measurements in a target carrier, but the UE may instead transmit UL transmissions and/or receive DL transmissions in the serving cell. In a second alternative implementation, the processing circuitry may skip only a part of a measurement gap, which overlaps in time with the adapted measurement gap skipping time period. In this alternative implementation, the processing circuitry skips only a part of the MG (or a part of an opportunity to perform a MG), so that the UE uses a part of the MG (occasion), which does not overlap with the adapted measurement gap skipping time period, and only does not use a part of the MG (occasion), which overlaps with the adapted measurement gap skipping time period. Accordingly, in the second alternative, the MG (occasion) is shortened, but not completely skipped, for a MG, which partially overlaps with the adapted measurement gap skipping time period in time.

A corresponding exemplary method comprises the following steps performed by a UE:
receiving one or more signals conveying configuration information for configuring a measurement gap skipping time period, wherein the measurement gap skipping time period is useable for determining occasions of skipping a measurement gap; and
adapting the configured measurement gap skipping time period to be aligned relative to an alignment boundary.

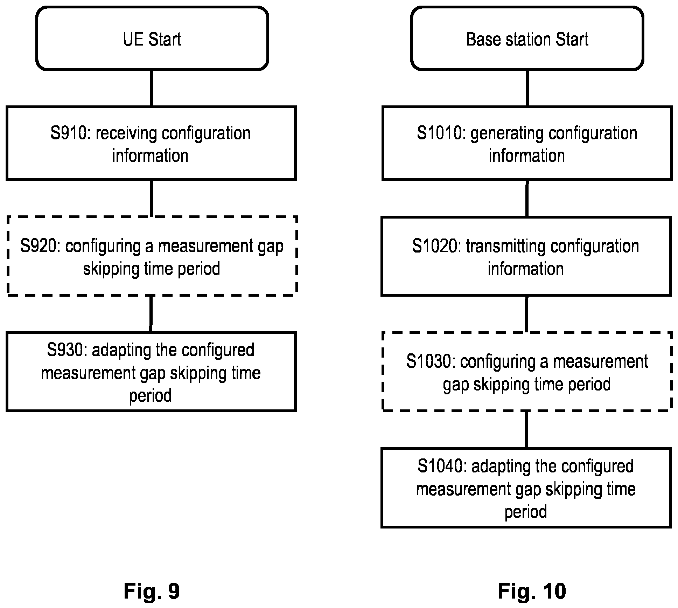

A corresponding sequence diagram for an exemplary UE behavior in line with the above-discussed UE and UE method is in **Fig. 9****.** As illustrated, the method may further comprise an optional step (S920) of configuring a measurement gap skipping time period (or pattern of measurement gap skipping time periods) by using the configuration information, which may include, for example, determining a start timing and an end timing (or one or more other parameter) of the configured measurement gap skipping time period(s) from the configuration information.

The above-described time period alignment procedure thus achieves the object and overcomes some of the drawbacks explained above. For instance, the adaption of the configured measurement gap skipping time period facilitates to correct a mismatch between the MG skipping time period and an XR frame jitter window, or between the MG skipping time period and a time resource unit used for data transmission (or reception). Furthermore, the adaption of the configured measurement gap skipping time period facilitates adapting the measurement gap skipping time period to a resource allocation of the UE. Hence, overall, the described time period alignment procedure facilitates adapting a measurement gap skipping time period more precisely to application need, so that unnecessary MG skipping can be avoided, while the latency requirements of data transmissions (and receptions) can be fulfilled.

Some exemplary implementations of the improved transmission procedure also involve improved base stations. Correspondingly, the improved transmission procedure also provides improved base stations that participate therein, as will be explained in the following.

**Fig. 8** illustrates a simplified and exemplary base station structure according to an exemplary implementation of the improved transmission procedure, which can be implemented based on the general base station structure explained in connection with Fig. 6. The various structural elements of the base station illustrated in said Fig. 8 can be interconnected between one another e.g., with corresponding input/output nodes (not shown) e.g., in order to exchange control and user data and other signals. Although not shown for illustration purposes, the base station may include further structural elements.

As apparent from Fig. 8, the base station may include a MG skipping time period configuration information generation circuit, and a MG skipping time period adaption circuitry.

In the present case as will become apparent from the below disclosure, the processing circuitry of the base station can thus be exemplarily configured to at least partly perform one or more of generating configuration information, configuring a measurement gap skipping time period, which is useable for determining occasions of skipping a measurement gap, adapt the configured measurement gap skipping time period, etc.

In the present case as will become apparent from the below disclosure, the transceiver of the base station can thus be exemplarily configured to at least partly perform one or more of adapting the configured measurement gap skipping time period, etc.

The processing circuitry of the base station may implement more functionality than the above-mentioned adapting the configured measurement gap skipping time period, as it may, for instance, further determine the configured measurement gap skipping time period and may control the transceiver to transmit or receive control signaling and/or to receive or transmit data.

Further, the processing circuitry may control skipping of a measurement gap, MG, which is configured during the adapted measurement gap skipping time period. In a first alternative implementation, the processing circuitry may skip a complete measurement gap, which at least partially overlaps in time or which completely overlaps in time with the adapted measurement gap skipping time period. In this alternative implementation, the processing circuitry skips a MG (or an opportunity to perform a MG) completely, so that the base station does not assume the UE to use a MG (occasion) determined from the configured MG pattern to perform (RRM) measurements in a target cell, but assumes that the UE may instead transmit UL transmissions and/or receive DL transmissions in the serving cell. In a second alternative implementation, the processing circuitry may skip only a part of a measurement gap, which overlaps in time with the adapted measurement gap skipping time period. In this alternative implementation, the processing circuitry skips only a part of the MG (or a part of an opportunity to perform a MG), so that the base station assumes that the UE uses a part of the MG (occasion), which does not overlap with the adapted measurement gap skipping time period, and only does not use a part of the MG (occasion), which overlaps with the adapted measurement gap skipping time period. Accordingly, in the second alternative, the MG (occasion) is shortened, but not completely skipped, for a MG, which partially overlaps with the adapted measurement gap skipping time period in time.

One exemplary procedure as will be disclosed in more detail further below is implemented by a base station that includes the following. A processing circuitry, in operation, (is configured to) generates configuration information for configuring a (one or more) measurement gap skipping time period(s), wherein the measurement gap skipping time period is useable for determining occasions of skipping a measurement gap. The processing circuitry, in operation, (is configured to) adapts the configured measurement gap skipping time period to be aligned relative to an alignment boundary. A transceiver of the base station, in operation, (is configured to) transmits one or more signals conveying the configuration information.

A corresponding method comprises the following steps performed by the base station:
generating configuration information for configuring a (one or more) measurement gap skipping time period(s), wherein the measurement gap skipping time period is useable for determining occasions of skipping a measurement gap;
adapting the configured measurement gap skipping time period to be aligned relative to an alignment boundary; and
transmitting one or more signals conveying the configuration information.

A corresponding sequence diagram for an exemplary base station behavior in line with the above-discussed base station and corresponding method is illustrated in Fig. 10. The sequence diagram illustrates an exemplary and simplified implementation of the above presented base station method. As illustrated, the method may further comprise an optional step (S1030) of configuring a measurement gap skipping time period (or pattern of measurement gap skipping time periods) by using the configuration information, which may include, for example, determining a start timing and an end timing (or one or more other parameter) of the configured measurement gap skipping time period(s) from the configuration information.

Different and exemplary implementations of the improved time period alignment procedures are explained in the following. For the explanation of the different implementation, some exemplary and simplifying assumptions are made. Here it should be noted that the improved time period alignment procedures are applied by the UE and by the base station, so that both entities can determine occasions where the UE may skip a measurement gap.

As an overview, in a first solution, the configured measurement gap skipping time period is adapted by adjusting at least one parameter of the configured measurement gap skipping time period with an offset parameter, which is explicitly indicated or configured, and whose value may be determined by the base station or by the UE. By using the offset parameter, the base station and the UE can align the configured measurement gap skipping time period with respect to an alignment boundary (which may be a boundary of a periodic transmission time period), so as to correct an misalignment between the configured measurement gap skipping time period and the alignment boundary (which may be determined by the base station or the UE), for example introduced by a drift over time. In other words, in the first solution, adapting the configured measurement gap skipping time period to be aligned relative to an alignment boundary, means adjusting at least one parameter of the configured measurement gap skipping time period with an offset parameter.

In a second solution, the measurement gap skipping time period is configured by using configuration information configuring another periodic transmission time period. Similar as in the first solution, the configured measurement gap skipping time period is adapted by adjusting at least one parameter of the configured measurement gap skipping time period with an offset parameter, which is explicitly indicated or configured. By using the offset parameter, the base station and the UE can align the configured measurement gap skipping time period with respect to a boundary of the other periodic transmission time period as an alignment boundary, so as to avoid an unintended misalignment between the configured measurement gap skipping time period and the boundary of the other periodic transmission time period. In other words, in the second solution, adapting the configured measurement gap skipping time period to be aligned relative to an alignment boundary, means adjusting at least one parameter of the configured measurement gap skipping time period (configured according to configuration information for another periodic transmission time period) with an offset parameter.

In a third solution, the configured measurement gap skipping time period is adapted by shifting at least one of a starting point or an ending point of the configured measurement gap skipping time period relative to the boundary of the time resource unit. In other words, in the third solution, adapting the configured measurement gap skipping time period to be aligned relative to an alignment boundary, means adapting at least one of a starting point or an ending point of the configured measurement gap skipping time period to match (be aligned with) a boundary of time resource unit.

In a fourth solution, the configured measurement gap skipping time period is adapted by shifting at least one of a starting point or an ending point of the configured measurement gap skipping time period relative to boundaries defined by a time resource unit configuration. In other words, in the fourth solution, adapting the configured measurement gap skipping time period to be aligned relative to an alignment boundary, means adapting at least one of a starting point or an ending point of the configured measurement gap skipping time period to match (be aligned with) a boundary defined by the time resource unit configuration.

It should be noted that each of the first to fourth solutions provide independent solutions, which individually or in combination provide improved time period alignment procedures. In other words, the improved time period alignment procedures may be achieved, when implementing at least one of the first to fourth solutions or when implementing any possible combination of the first to fourth solutions, as will become apparent in the following.

Further, the first to fourth solutions may each be applicable for a measurement gap skipping time period, which is configured according to individual configuration information e.g. included in a DCI message or, a MAC control element (CE) message a RRC message, or may be applicable for a (at least one) measurement gap skipping time period, which is included in a pattern of a plurality of measurement gap skipping time periods. In the latter case, for example, the pattern may be configured according to configuration information, which indicates a starting point of the pattern, a single duration applicable for all of the plurality of measurement gap skipping time periods included in the pattern and a single time difference between starting points of two consecutive measurement gap skipping time periods applicable for all of the plurality of measurement gap skipping time periods included in the pattern. Alternatively, the configuration information may include a bitmap indicating the starting point of the pattern, the duration for all of the plurality of measurement gap skipping time periods included in the pattern and the time difference between starting points of two consecutive measurement gap skipping time periods for all of the plurality of measurement gap skipping time periods included in the pattern.

Nevertheless, the configuration information may also indicate different information for allowing the UE to determine a timing, and more particular a starting point and an ending point, of the configured measurement gap skipping time period or of the plurality of configured measurement gap skipping time periods included in a pattern.

The mentioned solutions and their variants can be based on some or a combination of the different mechanisms described above in context of the exemplary 3GPP 5G-NR implementations, including e.g. the use of measurement gap skipping time period as time windows for determining occasions of skipping a measurement gap. In particular, while in the following solutions, measurement gap skipping time periods, are used as exemplary implementation of time periods to be aligned, it should be kept in mind that alternatively or in addition the disclosed adaption methods could be used for other pattern of periodic time periods, such as a pattern of configured grant (CG) uplink transmissions, a pattern of semi-persistent scheduling (SPS) downlink transmissions, or a pattern of DRX cycles, which are configured (or indicated) with non-integer parameter values, for example for at least one of a periodicity of the pattern, a duration of the periodic time periods, and a time offset between the periodic time periods.

In addition, it should be noted that XR and video streams are only particular exemplary scenarios for which the improved time period alignment procedures may be beneficially applied. Other scenarios also exist. Consequently, the solutions do not only apply to the transmission and reception of XR and video streams, but could be applied to the transmission and reception of other similar traffic, such as video broadcasting.

For the sake of illustration and explanation of the concepts and ideas underlying the improved time period alignment procedure, in the following according to one exemplary assumption, the data is data of a video frame or of a segment of a video frame. For example, the UE operates a video application, according to which video frames are generated with a video frame periodicity. Each video frame is generated within a jitter window having a jitter window length. The video frame periodicity depends on the video application, e.g. based on the frames per second (fps) of the video stream, such as 60 fps, 90 fps, 120 fps or another suitable number. The following description assumes a 60 fps video stream as an example.

The solutions and their variants and implementations are primarily and exemplarily described on the basis of such a video stream scenario, according to which video frames are communicated between the UE and the base station. In one example, the video application is an application for extended Reality (XR), as presented above for 5G NR.

However, this is only an example of a scenario to which the solutions can be applied. The solutions can also be applied to other scenarios than video frames, e.g. in scenarios in which data is exchanged with a varying periodicity, e.g. over a generating window (such as the jitter window for video frames) or with a varying size of the data to be transmitted. Other scenarios are for example the exchange of quasi-periodic data, including data from a monitoring or sensing application, such as smart-metering, environmental monitoring or agricultural monitoring.

Also in these scenarios, due to the integer periodicity of the MG and the non-integer periodicity of the radio resources used for video frames, there may be a delay that radio resources being used in the face of a MG. In such scenarios, there may be an over-provisioning of MGs, which may result in a delay in the communication of data. The improved time period alignment procedures described herein facilitate reducing the delay of such transmissions.

For the sake of simplicity, it is assumed in the following that the UE and base station are operating a video application in which video frames are exchanged in the downlink and/or uplink. It is also assumed that while the video frames themselves are periodic (see fps above), the generation of the video frames is quasi-periodic and occurs at one point in time during a time window, here exemplarily called "jitter window".

For the sake of illustration and explanation of the concepts and ideas underlying the improved transmission schemes, the following discussion will assume that one measurement gap skipping time period or one pattern of a plurality of measurement gap skipping time periods is configured, but such an assumption should not be viewed as limiting the present disclosure. Rather, it is also possible that more than one pattern of measurement gap skipping time periods is configured, wherein the different patterns could be configured with different parameter values.

### First solution

In the first solution, the configured measurement gap skipping time period is adapted to be aligned relative to an alignment boundary (which is defined by a boundary of a configured periodic time period in the first solution), by adjusting at least one parameter of the configured measurement gap skipping time period with an offset parameter. Stated in different words, according to the first solution the circuitry, in operation, adapts the configured measurement gap skipping time period by adapting at least one of a starting point or an ending point of the configured measurement gap skipping time period with an offset parameter to align the configured measurement gap skipping time period relative to a boundary of a periodic transmission time period (as an alignment boundary of the first solution).

The periodic transmission time periods may be a plurality of time periods, which are useable by the UE for transmissions of UL data (e.g. user data, signaling information or signals such as control signals, reference signals or the like), like a video (or XR) traffic or UL resource allocations for periodic UL transmissions, which are determined according to "configured grant" (CG) resource allocations or "grant free" resource allocations. Furthermore, the periodic transmission time periods may be a plurality of time periods, which are useable by the UE for reception of DL data (e.g. user data, signaling information or signals such as control signals, reference signals or the like), like DRX On Durations, which are determined according to the DRX configuration, or DL resource allocations for periodic DL transmissions, which are determined according to "semi-persistent scheduling" (SPS)" resource allocations. Stated more generally, configuration information for configuring a pattern of periodic transmission time periods may be configuration information, which indicates periodic time resources containing one or a combination of downlink and uplink resources.

In particular, the periodic transmission time periods may be defined by similar parameters as the measurement gap skipping time periods, for example at least one parameter associated with any of the following: a starting point of the periodic transmission time period, an ending point of the periodic transmission time period, a duration of the periodic transmission time period (i.e. a time difference between the starting point and the ending point of the periodic transmission time period), a time difference (or offset time) between starting points of two consecutive periodic transmission time periods, a time difference between an ending point of a transmission time period and a starting points of the next consecutive transmission time period. Furthermore, the periodic transmission time periods may be time periods, which are configured with any of a non-integer periodicity, a non-integer duration and a non-integer offset time.

In a first optional implementation, the offset parameter indicates a correction value, which is added to or subtracted from the configured measurement gap skipping time period, or more specifically from a starting point of the configured measurement gap skipping time period. In this manner, the starting point of the configured measurement gap skipping time period can be shifted (adjusted) forwards or backwards in time, for example for the duration of one or more resource time unit(s), like a slot, a symbol or a frame, or for a duration indicated in milliseconds, for example in order to align the starting points of the configured measurement gap skipping time period and of one of the periodic transmission time periods in time.

In a second optional implementation, the offset parameter indicates an offset time correction value, which is added to or subtracted from the time difference between the starting points of two consecutive measurement gap skipping time periods. Also in this manner, the starting point of the configured measurement gap skipping time period can be shifted (adjusted) forwards or backwards in time, for example for the duration of one or more resource time unit(s), like a slot or a symbol, for example in order to align the starting points of the configured measurement gap skipping time period and of the periodic transmission time periods in time.

In a first exemplary implementation of the first solution, the offset parameter is indicated by adaption information included in the configuration information. Or stated differently, the offset parameter is included in the configuration information, which is generated by the base station and received by the UE, for configuring the measurement gap skipping time period (to be adapted by using the offset parameter) or a pattern including the measurement gap skipping time periods (to be adapted by using the offset parameter).

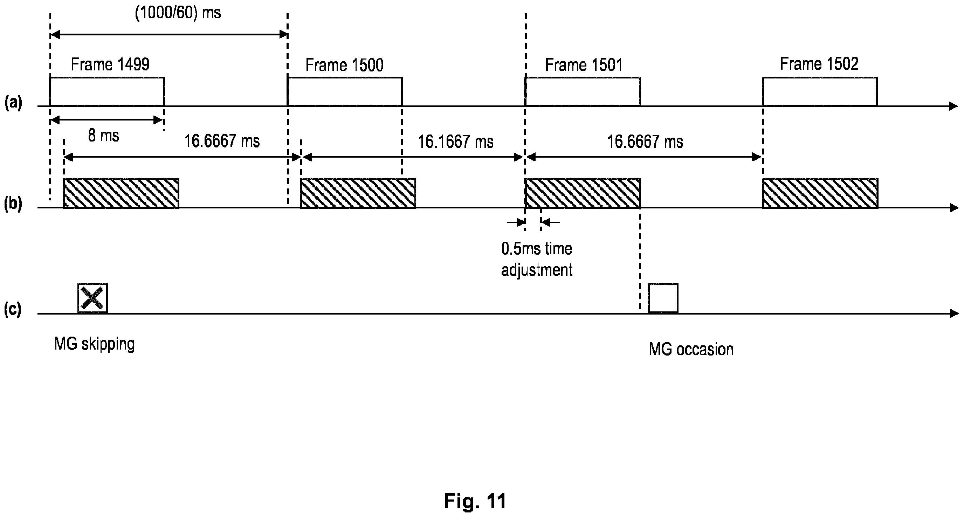

An example of the first exemplary implementation of the measurement gap skipping time period alignment procedure according to the first solution is illustrated in **Fig. 11****.** Here, a UE is receiving or transmitting a video stream as a XR traffic (see row (a) in Fig. 11) with the rate of 60 fps, so that a pattern of XR traffic jitter window as an exemplary periodic transmission time period is configured with a periodicity of 1000/60ms (i.e. 60 XR traffic jitter windows occur per 1000ms).

The UE is configured semi-statically with a pattern of measurement gap skipping time periods having a periodicity of 16,667 ms, (i.e. two consecutive measurement gap skipping time periods are configured with an offset time of 16,667 ms) (see row (b)). The video frames arrive over jitter windows of 8 ms, so that a duration of the XR traffic jitter windows and of the measurement gap skipping time periods included in the pattern are set to 8 ms. Due to the mismatch between the periodicities of the XR traffic jitter window and of the measurement gap skipping time periods, the XR traffic jitter window drifts forward in time relative to the measurement gap skipping time period by around 0.5 ms every 1500 cycles (of both patterns).

Because the base station configures the two patterns, the base station can anticipate the drift and instruct the UE by configuring the offset parameter to shift the starting point of the configured measurement gap skipping time period backwards in time by 0.5 ms every 1500 cycles. The UE, which receives the offset parameter in the configuration information adjusts the starting point of the configured measurement gap skipping time period (for example the one overlapping with frame 1501) every 1500 cycles by shifting the starting point by 0.5 ms backwards in time, so that the starting points of the measurement gap skipping time period and of the XR traffic jitter window are aligned in time again after 1500 cycles (see row (b) of Fig. 11), and the time drift can be compensated (also for the following measurement gap skipping time periods of the pattern). For example, if the starting points of the measurement gap skipping time periods in the pattern are determined by an offset time, which defines a time difference between starting points of two consecutive measurement gap skipping time periods, the offset parameter indicated in the configuration information may be an offset time correction value. In the illustrated example, the offset time correction value may take a value of 0.5 ms, and the UE (and the base station) may correct the regular offset time of 16.6667 ms in the pattern to be 16.6667 ms - 0.5 ms =16.1667 ms for determining the offset time between the 1500th and the 1501st measurement gap skipping time periods. The starting points of the measurement gap skipping time periods following the 1501st measurement gap skipping time period are then also be adjusted by the same correction value.

This has the effect that the UE can determine not to skip the MG, which is configured shortly after the end of frame 1501, (see row (c) of Fig. 11) and would not affect the latency of the video frame transmission, because this MG does not overlap with the adjusted MG skipping time period being aligned with frame 1501 (although it would at least partly overlap with the configured MG skipping time period without the time alignment).

Accordingly, the time alignment of the measurement gap skipping time period facilitates to better align the skipping of MGs with time windows for transmission or reception of data, and to avoid unnecessary skipping of measurement gaps.

For periodically adjusting the starting points of the measurement gap skipping time periods included in a pattern, the configuration information can further include an adaption periodicity value, which indicates a periodicity for adapting the measurement gap skipping time periods included in the pattern (e.g. every 1500 cycles), so that by using the adaption periodicity value the base station and the UE can configure a subset of measurement gap skipping time periods, to which the offset parameter, or more particularly an offset parameter indicated by the configuration information is applicable.

In the first exemplary implementation of the first solution, it may be an additional option to configure an additional positive or negative correction value (e.g. in units of time resource units, like symbols, slots, frames, or a combination thereof or in units of milliseconds, etc), which is applied to the measurement gap skipping time periods included in a pattern periodically, for example, after every pre-defined (or configured) number of time resource units, like symbols, slots, frames, or a combination thereof or after every pre-defined (or configured) number of milliseconds, or seconds.

In a second exemplary implementation of the first solution, the transceiver (of the UE), in operation, receives one or more signals conveying adaption information indicating the offset parameter separately from the configuration information. In other words, while in the first exemplary implementation of the first solution, the adaption information is part of the configuration information, in the second exemplary implementation of the first solution, the adaption information is received by the UE (or transmitted by the base station) separately (in time) from the configuration information. In an optional implementation, the adaption information is received in a downlink control information, DCI, message. Alternatively, the adaption information may be received by the UE (or transmitted by the base station) in a medium access control, MAC, control element, CE, message, or by higher layer signaling. The UE may optionally transmit an acknowledgement after receiving the control message including the adaption information as an adaption request.

In this manner, the base station could dynamically indicate an offset parameter to the UE in case that the base station determines that the time drift between the pattern of measurement gap skipping time periods and the pattern of the periodic transmission time period becomes too large (e.g. larger than a predetermined threshold value). This allows for dynamically aligning the measurement gap skipping time period with the periodic transmission time periods included in the two pattern and accordingly facilitates to better align the skipping of MGs with time windows for transmission or reception of data, and to avoid unnecessary skipping of measurement gaps.

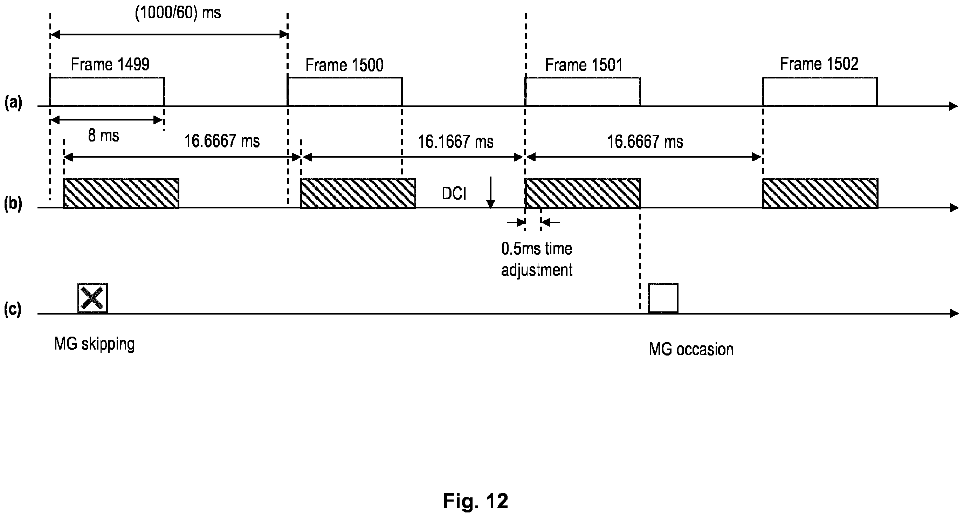

An example of the second exemplary implementation of the measurement gap skipping time period alignment procedure according to the first solution is illustrated in **Fig. 12****,** where the pattern of XR traffic jitter windows as an exemplary periodic transmission time period (row (a)), the pattern of measurement gap skipping time periods (row (b)) and the pattern of MGs (row (c)) are configured with the same parameters as in Figs. 3 and 11.

In the illustrated example, the base station may determine for frame 1500 that the starting point of the configured measurement gap skipping time period has been drifted compared to the starting point of the configured XR traffic jitter window by around 0.5 ms backwards in time. As a consequence, the base station transmits a DCI message to the UE between the frames 1500 and 1501, which indicates an offset time correction value of 0.5 ms, and the UE (and the base station) accordingly correct the regular offset time of 16.6667 ms in the pattern to be 16.6667 ms - 0.5 ms =16.1667 ms for determining the offset time between the 1500th and the 1501th measurement gap skipping time periods. The starting points of the measurement gap skipping time periods following the 1501st measurement gap skipping time period are then also be adjusted by the same correction value.

This has the effect that the UE can determine not to skip the MG, which is configured shortly after the end of frame 1501, (see row (c) of Fig. 11) and would not affect the latency of the video frame transmission, because this MG does not overlap with the adjusted MG skipping time period being aligned with frame 1501 (although it would at least partly overlap with the configured MG skipping time period without the time alignment).

In a third exemplary implementation of the first solution, the circuitry, in operation, generates an adaption request for receiving the adaption information; and the transceiver, in operation, transmits the adaption request. In other words, in the third exemplary implementation, the adaption of the measurement gap skipping time period (e.g. to be aligned with the periodic transmission time period) can be triggered by a UE request. This may facilitate for example, to align the measurement gap skipping time period with a XR traffic jitter window for UL XR traffic.

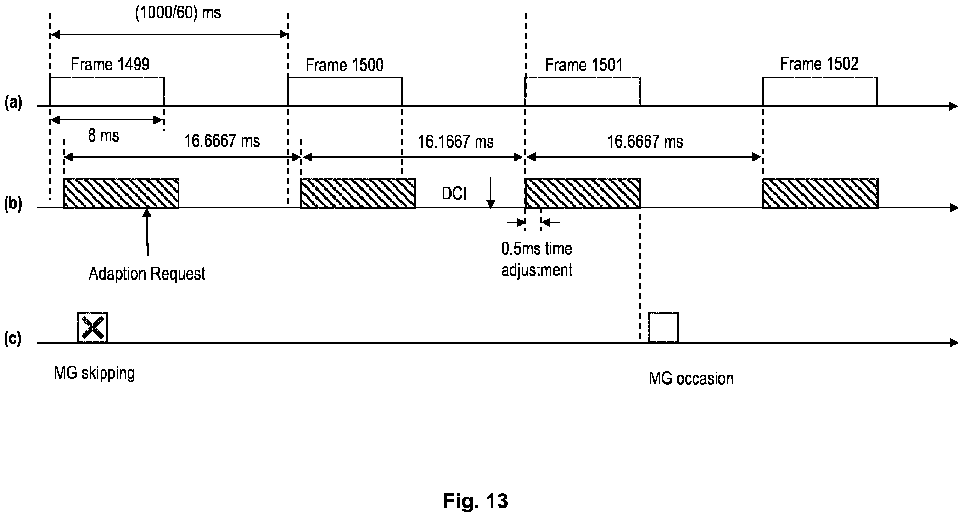

An example of the second exemplary implementation of the measurement gap skipping time period alignment procedure according to the first solution is illustrated in Fig. 13, where the pattern of XR traffic jitter windows as an exemplary periodic transmission time period (row (a)), the pattern of measurement gap skipping time periods (row (b)) and the pattern of MGs (row (c)) are configured with the same parameters as in Fig 12. In this example, the XR traffic jitter window is a (quasi)periodic time period, during which the UE (or more precisely the processing circuitry of the UE), generates ULXR traffic. When the UE determines that the measurement gap skipping time period(s) included in the pattern illustrated in row (b) are misaligned with the (overlapping) UL XR traffic jitter windows illustrated in row (a), the UE generates and transmits a request for time adjustment to the base station. In the illustrated example, the UE may determine for frame 1499 that the starting point of the configured measurement gap skipping time period has been drifted compared to the starting point of the configured XR traffic jitter window by around 0.5 ms backwards in time. As a consequence, the UE transmits the request for time adjustment as adaption request together with the ULXR traffic in frame 1499.

In response to receiving the adaption request, the base station transmits the adaption information indicating the offset parameter for adapting the measurement gap skipping time period in one of the ways disclosed for the second exemplary implementation of the first solution. In the illustrated example, the base station transmits a DCI message to the UE between the frames 1500 and 1501, which indicates an offset time correction value of a value of 0.5 ms, and the UE (and the base station) accordingly correct the regular offset time of 16.6667 ms in the pattern to be 16.6667 ms - 0.5 ms =16.1667 ms for determining the offset time between the 1500th and the 1501th measurement gap skipping time periods. The starting points of the measurement gap skipping time periods following the 1501st measurement gap skipping time period are then also be adjusted by the same correction value.

The amount of the misalignment may be determined by the UE and indicated in the adaption request and the base station may determine a value of the offset parameter by using the indicated amount of misalignment. Alternatively, the offset parameter may not indicate such information, but the base station may determine the amount of the misalignment in response to receiving the adaption request and may determine a value of the offset parameter in accordance therewith.

For determining when to issue the adaption request, the circuitry of the UE, in operation, after determining a plurality of periodic transmission time periods by using configuration information for configuring the plurality of periodic transmission time periods, determines misalignment time values between each of the periodic transmission time periods and the one of the plurality of measurement gap skipping time periods, which overlaps the respective periodic transmission time period in time. The circuitry of the UE, in operation, determines to generate the adaption request if the misalignment value is larger than a misalignment threshold value. For example, the misalignment time value can be determined as a time difference between a starting point of the periodic transmission time period and a starting point of the respective one of the plurality of measurement gap skipping time periods, which overlaps the transmission time period in time. The misalignment threshold value may be a pre-defined system parameter or may be included in the configuration information for configuring the pattern of measurement gap skipping time periods or in the configuration information for configuring the pattern of periodic transmission time periods.

### Second solution

In the second solution, a pattern of measurement gap skipping time periods is configured according to the configuration information indicating a configuration of a (different) periodic transmission time period. As in the first solution, the periodic transmission time period may be a time period, which is useable by the UE for transmission of UL data (e.g. user data, signaling information or signals such as control signals, reference signals or the like) or a time period, which is useable by the UE for reception of DL data (e.g. user data, signaling information or signals such as control signals, reference signals or the like). The configured measurement gap skipping time period is adapted to be aligned relative to an alignment boundary (which is defined by a boundary of the configured periodic transmission time period in the second solution), by adjusting at least one parameter of the configured measurement gap skipping time period by using a correction value.

Stated in different words, according to the second solution the configuration information indicates a configuration of a periodic transmission time interval, and the circuitry, in operation, configures the measurement gap skipping time period by using the configuration of the periodic transmission time interval, and adapts the configured measurement gap skipping time period by adapting at least one of a starting point or an ending point of the configured measurement gap skipping by using a correction value to align the configured measurement gap skipping time period relative to a boundary of an overlapping periodic transmission time interval.

Accordingly, in the second solution a pattern of measurement gap skipping time periods is automatically aligned with a pattern of another periodic transmission time periods. For example, the periodic transmission time periods could be a time period configured for the UE to perform UL transmissions, like a video (or XR) traffic jitter windows or UL resource allocations for periodic UL transmissions, which are determined according to "configured grant" (CG) resource allocations or "grant free" resource allocations, so that the measurement gap skipping time periods are automatically aligned with the UL traffic and MGs are only skipped during periods of possible uplink traffic. Similar the periodic transmission time period could be a time period configured for the UE to perform DL transmissions, like during DRX On Durations, which are determined according to the DRX configuration, or a DL resource allocations for periodic DL transmissions, which are determined according to "semi-persistent scheduling" (SPS)" resource allocations, so that the measurement gap skipping time period is automatically aligned with the DL traffic and MGs are only skipped during periods of possible downlink traffic. Of course, also a combination of these examples is possible.

In an optional implementation, the configuration information for configuring the (pattern of) measurement gap skipping time period(s) includes adaption information indicating the correction value for the plurality of measurement gap skipping time periods included in a pattern. The configuration information may be indicated to the UE by the base station, for example, by dynamic signaling (e.g. included in a DCI message) or by higher layer signaling (e.g. included in a RRC message). The adaption information, for example, may indicate a single correction value applicable for all of the plurality of measurement gap skipping time periods included in the pattern. Alternatively different correction values could be indicated, each being applicable for a subset of the plurality of measurement gap skipping time periods included in the pattern.

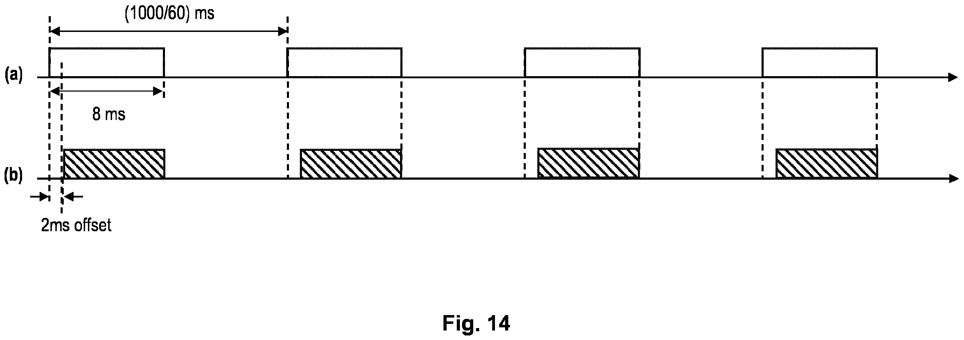

An exemplary implementation of the measurement gap skipping time period alignment procedure according to the second solution is illustrated in **Fig. 14****.** Here, a UE is configured with a pattern of DRX On Durations (see row (a) in Fig. 14) as an exemplary periodic transmission time period, which is configured by a DRX cycle with a periodicity of 1000/60ms (i.e. 60 DRX On Durations occur per 1000ms) for receiving XR traffic in DL. The measurement gap skipping time periods (see row (b) in Fig. 14) are configured according to the configuration information for the DRX cycle. Additionally, the starting point of each measurement gap skipping time period is shifted forward in time with respect to the starting point of the respective DRX On Duration (as an alignment boundary) by a correction value of 2 ms. At the same time, the ending point of each measurement gap skipping time period is aligned with respect to the ending point of the respective DRX On Duration, i.e. a correction value of 0 is applied to align the ending point of each measurement gap skipping time period with the ending point of the respective DRX On Duration.

In this manner, the second solution facilitates to align the measurement gap skipping time period with periodic transmission and reception periods of UL and DL traffic, so that unnecessary MG skipping can be avoided. Furthermore, the second solution facilitates the configuration of the measurement gap skipping time periods, because configuration information already being defined for another periodic transmission time interval can be re-used.

### Third solution

In the third solution, the configured measurement gap skipping time period is adapted to be aligned relative to an alignment boundary (which is defined by a boundary of a time resource unit in the third solution), by adapting at least one of a starting point or an ending point of the configured measurement gap skipping time period to match a boundary of the time resource unit. Stated in different words, according to the third solution the circuitry, in operation, adapts the configured measurement gap skipping time period by adapting at least one of a starting point or an ending point of the configured measurement gap skipping time period to correspond to a boundary of a time resource unit to align the configured measurement gap skipping time period relative to the boundary of the time resource unit (as an alignment boundary of the third solution).

The time resource unit, is for example a frame or a combination of a plurality of frames, so that the configured measurement gap skipping time period can be aligned by the UE (and the base station) with the boundaries of the one or more frames. In another example, the time resource unit is a slot or a combination of a plurality of slots, so that the configured measurement gap skipping time period can be aligned by the UE (and the base station) with the boundaries of the one or more slots. In another example, the time resource unit is a symbol or a combination of a plurality of symbols, so that the configured measurement gap skipping time period can be aligned by the UE (and the base station) with the boundaries of the one or more symbols. Alternatively, the time resource unit could be defined as a combination of one or more of radio frames, slots or symbols. A reference time resource for aligning the configured measurement gap skipping time period may be for example determined by the base station and may be indicated to the UE by adaption information indicating the reference time resource unit.

In the third solution, the UE (and the base station) may adjust the starting point and/or the ending point of the configured measurement gap skipping time period to a boundary of an earlier time resource unit by using a floor function or a rounding function and may adjust the starting point and/or the ending point of the configured measurement gap skipping time period to a boundary of a later time resource unit by using a ceiling function or a rounding function.

In a first implementation example of the third solution, the circuitry, in operation, shortens a duration between the starting point and the ending point of the adapted measurement gap skipping time period compared to a duration between the starting point and the ending point of the configured measurement gap skipping time period. In the first implementation example, the circuitry of the UE (and of the base station) may apply a ceiling function or a rounding function for aligning the starting point of the configured measurement gap skipping time period with a starting point of a later time resource unit, and/or may apply a floor function or a rounding function for aligning the ending point of the configured measurement gap skipping time period with an ending point of an earlier time resource unit. In this manner, the measurement gap skipping time period can be shortened compared to an overlapping transmission time period, like the periodic transmission time period mentioned for the first and second solution. Accordingly, an MG occasion can be protected from skipping at the beginning and the end of the transmission time period, e.g. in case of a partial overlap between the MG occasion and the transmission time period.

In a second implementation example of the third solution, the circuitry, in operation, enhances a duration between the starting point and the ending point of the adapted measurement gap skipping time period compared to a duration between the starting point and the ending point of the configured measurement gap skipping time period. In the second implementation example, the circuitry of the UE (and of the base station) may apply a floor function or a rounding function for aligning the starting point of the configured measurement gap skipping time period with an ending point of an earlier time resource unit and/or may apply a ceiling function or a rounding function for aligning the ending point of the configured measurement gap skipping time period with a starting point of a later time resource unit. In this manner, the measurement gap skipping time period can be extended compared to an overlapping transmission time period, like the periodic transmission time period mentioned for the first and second solution, so that the transmission time period (or more specifically XR traffic being transmitted in the transmission time period) can be protected from being interrupted by a MG at the beginning and the end of the transmission time period, e.g. in case of a partial overlap between the MG occasion and the transmission time period.

In the third solution, whether to enhance or shorten a duration of the configured measurement gap skipping time period(s) may be configured separately for different configurations of MG pattern or for different configurations of measurement gap skipping time period pattern.

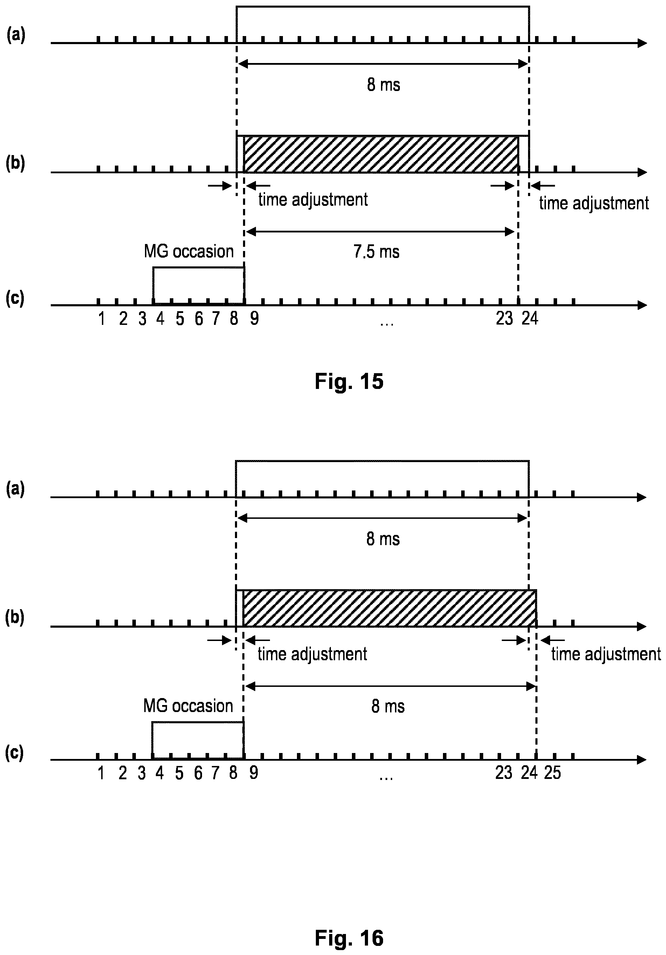

A first exemplary implementation of the measurement gap skipping time period alignment procedure according to the third solution is illustrated in **Fig. 15****.** Here, a UE is receiving or transmitting a video stream as a XR traffic (see row (a) in Fig. 15) in an XR traffic jitter window having a duration of 8 ms. Due to the non-integer configuration parameters, the starting point and the ending point of the XR traffic jitter window are not aligned with the slot boundaries, but lie within slot 8 and slot 24, respectively. The boundaries of the configured measurement gap skipping time period (see row (b) in Fig. 15) are aligned with the boundaries of the XR traffic jitter window, so that the starting point of the configured measurement gap skipping time period lies within slot 8 and ending point of the configured measurement gap skipping time period lies within slot 24.

In the illustrated example, the UE (and the base station) reduces the length of the measurement gap skipping time period to protect MG opportunities. Accordingly, the processing circuitry of the UE adapts the starting point of the configured measurement gap skipping time period to correspond to the starting point (as a slot boundary) of the next earliest slot, i.e. slot 9 (being equal to the ending point of current slot 8), and adapts the ending point of the configured measurement gap skipping time period to correspond to the ending point (as a slot boundary) of the foregoing slot, i.e. slot 23 (being equal to the starting point of current slot 24), so that the duration of the adapted measurement gap skipping time period is shortened to 7.5 ms. Since the adapted measurement gap skipping time period does not overlap with the MG occasion being configured for slots 4 to 8 (see row (c)), the UE does not skip the MG occasion.

In a third implementation example of the third solution, the measurement gap skipping time period may be shifted without changing the duration of the measurement gap skipping time period during the alignment procedure. In particular, in the third implementation example of the third solution, the circuitry, in operation, shifts the starting point and the ending point of the adapted measurement gap skipping time period relative to the starting point and the ending point of the configured measurement gap skipping time period by a same correction value. For example, the circuitry may determine a time difference between the starting point (or the ending point) of the configured measurement gap skipping time period and a boundary of the time resource unit, and may shift the starting point and the ending point of the configured measurement gap skipping time period by the same determined time difference. Alternatively, the circuitry may shift the starting point of the configured measurement gap skipping time period to be aligned with a boundary of the time resource unit while keeping the duration of the configured measurement gap skipping time period constant.

An exemplary measurement gap skipping time period alignment procedure according to the third implementation example of the third solution is illustrated in **Fig. 16****,** where the XR traffic jitter window (see row (a)) and the measurement gap skipping time period are configured as described for Fig. 15. In the illustrated example, the UE (and the base station) adapts the starting point of the configured measurement gap skipping time period (see row (b)) to correspond to the starting point (as a slot boundary) of the next earliest slot, i.e. slot 9 (being equal to the ending point of current slot 8). The ending point of the configured measurement gap skipping time period is shifted by the same offset amount as the starting point, to maintain the duration of 8 ms of the configured measurement gap skipping time period. Accordingly, the ending point of the configured measurement gap skipping time period is adjusted to correspond to the starting point (as a slot boundary) of the next earliest slot, i.e. slot 25 (being equal to the ending point of current slot 24), so that the duration of the adapted measurement gap skipping time period (8 ms) is maintained. Since the adapted measurement gap skipping time period does not overlap with the MG occasion being configured for slots 4 to 8 (see row (c)), the UE does not skip the MG occasion.

While the measurement gap skipping time period alignment procedure according to the third solution was explained so far on the example of adapting a single measurement gap skipping time period, this should not be understood as limiting for the present disclosure. The described measurement gap skipping time period alignment procedure and its variants may in particular also be applied to adjust a plurality of measurement gap skipping time periods being included in a pattern individually to the boundaries of time resource units. Especially, it should be noted that the alignment procedure of the third solution may also be used in addition to the alignment procedure of the first solution and of the second solution.

### Fourth solution

In the fourth solution, the configured measurement gap skipping time period to be aligned relative to an alignment boundary (which is defined by a time resource unit configuration in the fourth solution), by adapting at least one of a starting point or an ending point of the configured measurement gap skipping time period to match a boundary defined by the time resource unit configuration. Stated in different words, according to the fourth solution the circuitry, in operation, adapts the configured measurement gap skipping time period by shifting at least one of a starting point or an ending point of the configured measurement gap skipping time period to align the configured measurement gap skipping time period relative to boundaries defined by a time resource unit configuration.

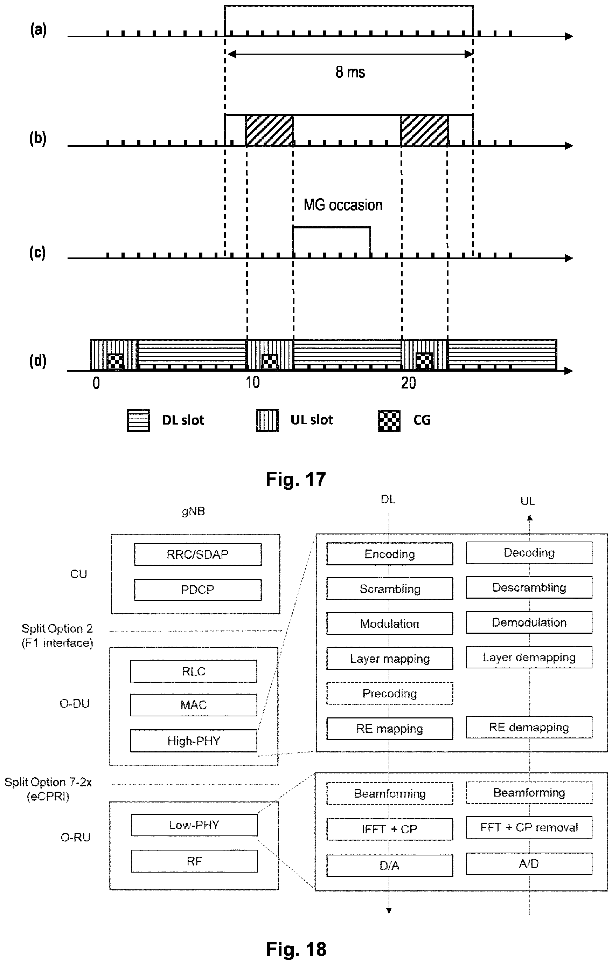

The time resource unit configuration is a configuration, which defines a pattern of time resource units, so that the UE can determine UL time resource units, which are useable for transmitting UL data (including payload and/or signals such as control signals, reference signals or the like), DL time resource units, which are useable for receiving DL data, and flexible time resource units, which are useable either for transmitting UL data or for receiving DL data as per requirement. The time resource unit configuration can be configured by static (e.g. in an SIB1 message), semi- static (e.g. in an RRC message) or dynamic (e.g. in a DCI message) signaling. An exemplary time resource unit configuration is illustrated in row (d) of Fig. 17, as a slot configuration, which has a periodicity of 10 slots (i.e. which is repeated every 10 slots) and which defines the first three slots (i.e. slots 0-2, slots 10-12, and slots 20-22) to be UL slots and the next seven slots (i.e. slots 3-9, slots 13-19 and slots 23-29) to be DL slots.

The time resource unit configuration, is for example a slot configuration, which indicates a timing of DL slots, UL slot and special slots, or a symbol configuration, which indicates a timing of DL symbols, UL symbols and special symbols. The boundaries defined by the time resource unit configuration are, for example, boundaries defined by the configuration between DL time resource units (frames, slots or symbols) and UL time resource units (frames, slots or symbols), between DL time resource units (frames, slots or symbols) and flexible time resource units (frames, slots or symbols), and/or between UL time resource units (frames, slots or symbols) and flexible time resource units (frames, slots or symbols).

The fourth solution is useful for adjusting the configured measurement gap skipping time period to the transmission requirements of the UE, for example, for cases where the UE is only scheduled to receive DL transmissions or is only scheduled to transmit UL transmissions. Accordingly, in an implementation example of the fourth solution, the circuitry, in operation determines the boundaries defined by the time resource unit configuration according to a scheduling configuration of the UE. For example, if the UE only transmits ULXR traffic, but does not receive DLXR traffic, the circuitry of the UE (and of the base station) may adapt the parameters of the configured measurement gap skipping time period to overlap with the UL time resource units (and optionally some or all of the flexible time resource units) configured for the UE, while the circuitry of the UE (and of the base station) may adapt the parameters of the configured measurement gap skipping time period to not overlap with the DL time resource units configured for the UE. Similar, if the UE only receives DL XR traffic, but does not transmit UL XR traffic, the circuitry of the UE (and of the base station) may adapt the parameters of the configured measurement gap skipping time period to overlap with the DL time resource units (and optionally some or all of the flexible time resource units) configured for the UE, while the circuitry of the UE (and of the base station) may adapt the parameters of the configured measurement gap skipping time period to not overlap with the UL time resource units configured for the UE.

An exemplary implementation of the measurement gap skipping time period alignment procedure according to the fourth solution is illustrated in Fig. 17. Here, a UE is configured to transmit ULXR traffic in UL time resource units, which are determined according to a "configured grant" (CG) resource allocation (or "grant free" resource allocation) as a time resource unit configuration. In the illustrated example, the UE determines slots 1, 11, and 21 as UL time resource units for transmitting the ULXR traffic (e.g. UL XR data) according to an exemplary CG resource allocation. Further, in the illustrated example, the UE is not required to receive DL transmissions.

In Fig. 17, the UE is further configured a measurement gap skipping time period aligned with XR traffic jitter windows having a duration of 8 ms (see rows (a) and (b)). The boundaries of the configured measurement gap skipping time period are aligned with the boundaries of the XR traffic jitter window, so that the starting point of the configured measurement gap skipping time period lies within slot 8 and ending point of the configured measurement gap skipping time period lies within slot 24. As illustrated in Fig. 17, the configured measurement gap skipping time period overlaps also DL slots (e.g. slots 9, slots 13 to 19 and slot 24), where the UE does not need to skip a MG occasion, because DL transmission are not required to be received in this example.

To enable using an MG occasion during the unused DL time resource units (here DL slots), the circuitry of the UE (and of the base station) adapts the configured measurement gap skipping time period to be aligned with the boundaries of the UL time resource units (here UL slots). Especially, the circuitry of the UE (and of the base station) adjusts the starting point of the configured measurement gap skipping time period to be aligned with the boundary between DL slot 9 and UL slot 10, and adjusts the ending point of the configured measurement gap skipping time period to be aligned with the boundary between UL slot 22 and DL slot 23. Further, the circuitry of the UE (and of the base station) determines not to apply the configured measurement gap skipping time period between the boundary between UL slot 12 and DL slot 13, and the boundary between DL slot 19 and UL slot 20. In this manner, the configured measurement gap skipping time period is adapted to be only valid when overlapping UL time resource units, but the part of the configured measurement gap skipping time period, which overlaps DL time resource units is not considered for MG occasion skipping (see row (b) of Fig. 17).

In the fourth solution, an MG occasion is only skipped, if it collides in time with the adjusted measurement gap skipping time period, so that in the illustrated example, the MG occasion (see row (d) of Fig. 17), which is configured in slots 13 to 17 (which are configured as DL slots for the UE) is not skipped.

Accordingly, the fourth solution facilitates to avoid skipping of the MG in time resource units, which are not used for communication by the UE, while the configuration of the measurement gap skipping time period can be kept simple.

While the measurement gap skipping time period alignment procedure according to the fourth solution was explained so far on the example of adapting a single measurement gap skipping time period, this should not be understood as limiting for the present disclosure. The described measurement gap skipping time period alignment procedure and its variants may in particular also be applied to adjust a plurality of measurement gap skipping time periods being included in a pattern individually to the boundaries of time resource units. Especially, it should be noted that the alignment procedure of the third solution may also be used in addition to the alignment procedure according to one of the first to third solutions.

Furthermore, it should be noted that in the fourth solution, optionally, the circuitry, of the UE (and of the base station) in operation determines the boundaries defined by the time resource unit configuration according to a frequency bandwidth associated with the scheduling configuration of the UE. This allows to adapt the configured measurement gap skipping time period to the slot durations defined in different frequency bandwidths (e.g. in FR1 and in FR2). As another option, the circuitry, in operation determines the boundaries defined by the time resource unit configuration according to a subcarrier spacing configuration of the measurement gap, in order to adapt the measurement gap skipping time period to the boundaries of the time resource units of the target carrier, for which measurements in the MG are performed. In another option, the circuitry, in operation, determines the boundaries defined by the time resource unit configuration according to a subcarrier spacing configuration defined in the scheduling configuration of the UE, which may be used in order to adapt the measurement gap skipping time period to the boundaries of the time resource units of the serving cell.

### Further Implementations

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate ULand DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**FIG. 18** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Further Variants, including Hardware and Software Implementation of the present disclosure

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also, a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments and solutions. The present embodiments and solutions are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, there is provided a user equipment, UE, comprising a transceiver, which in operation, receives one or more signals conveying configuration information for configuring a measurement gap skipping time period, wherein the measurement gap skipping time period is useable for determining occasions of skipping a measurement gap, and circuitry, which in operation, adapts the configured measurement gap skipping time period to be aligned relative to an alignment boundary.

According to a second aspect, provided in addition to the first aspect, the measurement gap skipping time period is included in a pattern of a plurality of measurement gap skipping time periods. In an optional implementation, the configuration information indicates a starting point of the pattern, a single duration and a single time difference between starting points of two consecutive measurement gap skipping time periods applicable for all of the plurality of measurement gap skipping time periods included in the pattern. In another optional implementation, the configuration information includes a bitmap indicating a starting point of the pattern, a duration and a time difference between starting points of two consecutive measurement gap skipping time periods for all of the plurality of measurement gap skipping time periods included in the pattern.

According to a third aspect, provided in addition to any of the first or second aspect, the circuitry, in operation, adapts the configured measurement gap skipping time period by adapting at least one of a starting point or an ending point of the configured measurement gap skipping time period with an offset parameter to align the configured measurement gap skipping time period relative to a boundary of a periodic transmission time period. In an optional implementation, the offset parameter indicates a correction value, which is added to or subtracted from the configured measurement gap skipping time period. In another optional implementation, the offset parameter indicates an offset time correction value, which is added to or subtracted from the time difference between the starting points of two consecutive measurement gap skipping time periods.

According to a fourth aspect, provided in addition to the third aspect, the offset parameter is indicated by adaption information included in the configuration information. In an optional implementation, the configuration information indicates a single offset parameter applicable for a subset of measurement gap skipping time periods included in a pattern of a plurality of measurement gap skipping time periods. In another optional implementation, the configuration information indicates an adaption periodicity value for configuring the subset of measurement gap skipping time periods, to which the offset parameter is applicable.

According to a fifth aspect, provided in addition to the third aspect, the transceiver, in operation, receives one or more signals conveying adaption information indicating the offset parameter separately from the configuration information. In an optional implementation, the adaption information is received in a downlink control information, DCI, message. In another optional implementation, the adaption information is received in a medium access control, MAC, control element, CE, message. In another optional implementation, the adaption information is received by higher layer signaling.

According to a sixth aspect, provided in addition to the fifth aspect, the circuitry, in operation, generates an adaption request for receiving the adaption information, and the transceiver, in operation, transmits the adaption request.

According to a seventh aspect, provided in addition to the sixth aspect, the circuitry, in operation, determines a plurality of periodic transmission time periods, determines a misalignment time value between a periodic transmission time period and one of the plurality of measurement gap skipping time periods, which overlaps the periodic transmission time period in time, and generates the adaption request if the misalignment value is larger than a misalignment threshold value. In an optional implementation, the misalignment time value is determined as a time difference between a starting point of the periodic transmission time period and a starting point of the one of the plurality of measurement gap skipping time periods, which overlaps the transmission time period in time. In another optional implementation, a periodicity of the periodic transmission time periods corresponds to a non-integer value. In another optional implementation, the configuration information for the plurality of periodic transmission time periods indicates periodic time resources containing one or a combination of downlink and uplink resources.

According to an eighth aspect, provided in addition to any of the first to seventh aspects, the configuration information indicates a configuration of a periodic transmission time interval, and the circuitry, in operation, configures the measurement gap skipping time period by using the configuration of the periodic transmission time interval, and the circuitry, in operation, adapts the configured measurement gap skipping period by adapting at least one of a starting point or an ending point of the configured measurement gap skipping by using a correction value to align the configured measurement gap skipping period relative to a boundary of an overlapping periodic transmission time interval. In an optional implementation, the configuration information includes adaption information indicating the correction value for a plurality of measurement gap skipping time periods included in a pattern. In another optional implementation, the configuration information includes adaption information indicating a single correction value for all of the plurality of measurement gap skipping time periods included in the pattern.

According to a ninth aspect, provided in addition to any of the first to eighth aspects, the circuitry, in operation, adapts the configured measurement gap skipping period by adapting at least one of a starting point or an ending point of the configured measurement gap skipping time period to correspond to a boundary of a time resource unit to align the configured measurement gap skipping time period relative to the boundary of the time resource unit. In an optional implementation, the circuitry, in operation, shortens a duration between the starting point and the ending point of the adapted measurement gap skipping time period compared to a duration between the starting point and the ending point of the configured measurement gap skipping time period. In another optional implementation, the circuitry, in operation, enhances a duration between the starting point and the ending point of the adapted measurement gap skipping time period compared to a duration between the starting point and the ending point of the configured measurement gap skipping time period. In another optional implementation, the circuitry, in operation, shifts the starting point and the ending point of the adapted measurement gap skipping time period relative to the starting point and the ending point of the configured measurement gap skipping time period by a same correction value. In another optional implementation, the transceiver, in operation receives one or more signals conveying adaption information indicating a reference time resource unit for aligning the configured measurement gap skipping time period.

According to a tenth aspect, provided in addition to any of the first to ninth aspects, the circuitry, in operation, adapts the configured measurement gap skipping period by shifting at least one of a starting point or an ending point of the configured measurement gap skipping time period to align the configured measurement gap skipping time period relative to boundaries defined by a time resource unit configuration. In an optional implementation, the boundaries defined by the time resource unit configuration, are boundaries between two out of a downlink time resource unit, an uplink time resource unit and a flexible time resource unit. In another optional implementation, the circuitry, in operation determines the boundaries defined by the time resource unit configuration according to a scheduling configuration of the UE. In another optional implementation, the circuitry, in operation determines the boundaries defined by the time resource unit configuration according to a frequency bandwidth associated with the scheduling configuration of the UE. In another optional implementation, the circuitry, in operation determines the boundaries defined by the time resource unit configuration according to a subcarrier spacing configuration of the measurement gap or according to a subcarrier spacing configuration of the scheduling configuration of the UE. In another optional implementation, the transceiver, in operation receives one or more signals conveying adaption information indicating the boundaries, to which the configured measurement gap skipping time period is aligned.

According to an eleventh aspect, provided in addition to any of the ninth or tenth aspects, the time resource unit is one or a combination of radio frames, slots or symbols.

According to a twelfth aspect, provided in addition to any of the first to eleventh aspects, the circuitry, in operation, skips a measurement gap, MG, which is configured during the adapted measurement gap skipping time period. In an optional implementation, the circuitry, in operation, skips a complete measurement gap, which at least partially overlaps in time or which completely overlaps in time with the adapted measurement gap skipping time period. In another optional implementation, the circuitry, in operation, only skips a part of a measurement gap, which overlaps in time with the adapted measurement gap skipping time period.

According to a thirteenth aspect, there is provided a base station comprising circuitry, which in operation, generates configuration information for configuring a measurement gap skipping time period, wherein the measurement gap skipping time period is useable for determining occasions of skipping a measurement gap, and adapts the configured measurement gap skipping time period to be aligned relative to an alignment boundary, and a transceiver, which in operation, transmits one or more signals conveying the configuration information. In an optional implementation, the circuitry of the base station may perform one or a combination of the steps as defined in any of the first to thirteenth aspect for adapting the configured measurement gap skipping time period.

According to a fourteenth aspect, provided in addition to the thirteenth aspect, the circuitry, in operation, generates adaption information for adapting the configured measurement gap skipping time period to be aligned relative to the alignment boundary, and transmits one or more signals conveying the adaption information. In an optional implementation, the circuitry in operation, determines an offset parameter for aligning the configured measurement gap skipping time period relative to a boundary of a periodic transmission time period, and wherein the adaption information indicates the offset parameter. In another optional implementation, the circuitry in operation, determines a correction value for aligning the configured measurement gap skipping time period relative to a boundary of an overlapping periodic transmission time interval, and the adaption information indicates the correction value. In another optional implementation, the circuitry in operation, determines a reference time resource unit for aligning the configured measurement gap skipping time period relative to a boundary defined by the time resource unit, and the adaption information indicates the reference time resource unit. In another optional implementation, the circuitry in operation, determines boundaries defined by a time resource unit configuration for aligning the configured measurement gap skipping time period relative to the boundaries defined by the time resource unit configuration, and the adaption information indicates the boundaries defined by the time resource unit configuration.

According to a fifteenth aspect, there is provided a method comprising the following steps performed by a user equipment, UE:
- receiving one or more signals conveying configuration information for configuring a measurement gap skipping time period, wherein the measurement gap skipping time period is useable for determining occasions of skipping a measurement gap, and
- adapting the configured measurement gap skipping time period to be aligned relative to an alignment boundary.

According to an embodiment, the method further comprises one or a combination of the steps performed by the UE defined in any of the first to twelfth aspect.

According to a sixteenth aspect, there is provided an integrated circuit for controlling a process of a user equipment, UE, the process including:
- receiving one or more signals conveying configuration information for configuring a measurement gap skipping time period, wherein the measurement gap skipping time period is useable for determining occasions of skipping a measurement gap, and
- adapting the configured measurement gap skipping time period to be aligned relative to an alignment boundary.

According to an embodiment, the process further includes one or a combination of the steps performed by the UE defined in any of the first to twelfth aspect.

According to a seventeenth aspect, there is provided a method comprising the following steps performed by a base station:
- generating configuration information for configuring a measurement gap skipping time period, wherein the measurement gap skipping time period is useable for determining occasions of skipping a measurement gap,
- adapting the configured measurement gap skipping time period to be aligned relative to an alignment boundary, and
- transmitting one or more signals conveying the configuration information.

According to an embodiment, the method further comprises one or a combination of the steps performed by the base station defined in the fourteenth aspect.

According to an eighteenth aspect, there is provided an integrated circuit for controlling a process of a base station, the process including:
- generating configuration information for configuring a measurement gap skipping time period, wherein the measurement gap skipping time period is useable for determining occasions of skipping a measurement gap,
- adapting the configured measurement gap skipping time period to be aligned relative to an alignment boundary, and
- transmitting one or more signals conveying the configuration information.

According to an embodiment, the process further comprises one or a combination of the steps performed by the base station defined in the fourteenth aspect.

## Claims

1. A user equipment, UE, comprising:
a transceiver, which in operation, receives one or more signals conveying configuration information for configuring a measurement gap skipping time period, wherein the measurement gap skipping time period is useable for determining occasions of skipping a measurement gap; and
circuitry, which in operation, adapts the configured measurement gap skipping time period to be aligned relative to an alignment boundary.

2. The UE according to claim 1, wherein the measurement gap skipping time period is included in a pattern of a plurality of measurement gap skipping time periods;
optionally, wherein the configuration information indicates a starting point of the pattern, a single duration and a single time difference between starting points of two consecutive measurement gap skipping time periods applicable for all of the plurality of measurement gap skipping time periods included in the pattern;
optionally, wherein the configuration information includes a bitmap indicating a starting point of the pattern, a duration and a time difference between starting points of two consecutive measurement gap skipping time periods for all of the plurality of measurement gap skipping time periods included in the pattern.

3. The UE according to one of claims 1 or 2, wherein the circuitry, in operation, adapts the configured measurement gap skipping time period by adapting at least one of a starting point or an ending point of the configured measurement gap skipping time period with an offset parameter to align the configured measurement gap skipping time period relative to a boundary of a periodic transmission time period;
optionally, wherein the offset parameter indicates a correction value, which is added to or subtracted from the configured measurement gap skipping time period;
optionally, wherein the offset parameter indicates an offset time correction value, which is added to or subtracted from the time difference between the starting points of two consecutive measurement gap skipping time periods.

4. The UE according to claim 3, wherein the offset parameter is indicated by adaption information included in the configuration information;
optionally, wherein the configuration information indicates a single offset parameter applicable for a subset of measurement gap skipping time periods included in a pattern of a plurality of measurement gap skipping time periods;
optionally, wherein the configuration information indicates an adaption periodicity value for configuring the subset of measurement gap skipping time periods, to which the offset parameter is applicable.

5. The UE according to claim 3, wherein the transceiver, in operation, receives one or more signals conveying adaption information indicating the offset parameter separately from the configuration information;
optionally, wherein the adaption information is received in a downlink control information, DCI, message;
optionally, wherein the adaption information is received in a medium access control, MAC, control element, CE, message;
optionally, wherein the adaption information is received by higher layer signaling.

6. The UE according to claim 5, wherein the circuitry, in operation, generates an adaption request for receiving the adaption information; and
the transceiver, in operation, transmits the adaption request.

7. The UE according to claim 6, wherein
the circuitry, in operation,
determines a plurality of periodic transmission time periods;
determines a misalignment time value between a periodic transmission time period and one of the plurality of measurement gap skipping time periods, which overlaps the periodic transmission time period in time; and
generates the adaption request if the misalignment value is larger than a misalignment threshold value;
optionally, wherein the misalignment time value is determined as a time difference between a starting point of the periodic transmission time period and a starting point of the one of the plurality of measurement gap skipping time periods, which overlaps the transmission time period in time;
optionally, wherein a periodicity of the periodic transmission time periods corresponds to a non-integer value;
optionally wherein the configuration information for the plurality of periodic transmission time periods indicates periodic time resources containing one or a combination of downlink and uplink resources.

8. The UE according to one of claims 1 to 7, wherein the configuration information indicates a configuration of a periodic transmission time interval, and wherein the circuitry, in operation, configures the measurement gap skipping time period by using the configuration of the periodic transmission time interval, and
wherein the circuitry, in operation, adapts the configured measurement gap skipping period by adapting at least one of a starting point or an ending point of the configured measurement gap skipping by using a correction value to align the configured measurement gap skipping period relative to a boundary of an overlapping periodic transmission time interval;
optionally, wherein the configuration information includes adaption information indicating the correction value for a plurality of measurement gap skipping time periods included in a pattern;
optionally, wherein the configuration information includes adaption information indicating a single correction value for all of the plurality of measurement gap skipping time periods included in the pattern.

9. The UE according to one of claims 1 to 8, wherein the circuitry, in operation, adapts the configured measurement gap skipping period by adapting at least one of a starting point or an ending point of the configured measurement gap skipping time period to correspond to a boundary of a time resource unit to align the configured measurement gap skipping time period relative to the boundary of the time resource unit;
optionally, wherein the circuitry, in operation, shortens a duration between the starting point and the ending point of the adapted measurement gap skipping time period compared to a duration between the starting point and the ending point of the configured measurement gap skipping time period;
optionally, wherein the circuitry, in operation, enhances a duration between the starting point and the ending point of the adapted measurement gap skipping time period compared to a duration between the starting point and the ending point of the configured measurement gap skipping time period;
optionally, wherein the circuitry, in operation, shifts the starting point and the ending point of the adapted measurement gap skipping time period relative to the starting point and the ending point of the configured measurement gap skipping time period by a same correction value;
optionally, wherein the transceiver, in operation receives one or more signals conveying adaption information indicating a reference time resource unit for aligning the configured measurement gap skipping time period.

10. The UE according to claim one of claims 1 to 9, wherein the circuitry, in operation, adapts the configured measurement gap skipping period by shifting at least one of a starting point or an ending point of the configured measurement gap skipping time period to align the configured measurement gap skipping time period relative to boundaries defined by a time resource unit configuration;
optionally, wherein the boundaries defined by the time resource unit configuration, are boundaries between two out of a downlink time resource unit, an uplink time resource unit and a flexible time resource unit;
optionally, wherein the circuitry, in operation determines the boundaries defined by the time resource unit configuration according to a scheduling configuration of the UE;
optionally, wherein the circuitry, in operation determines the boundaries defined by the time resource unit configuration according to a frequency bandwidth associated with the scheduling configuration of the UE;
optionally, wherein the circuitry, in operation determines the boundaries defined by the time resource unit configuration according to a subcarrier spacing configuration of the measurement gap or according to a subcarrier spacing configuration of the scheduling configuration of the UE;
optionally, wherein the transceiver, in operation receives one or more signals conveying adaption information indicating the boundaries, to which the configured measurement gap skipping time period is aligned.

11. The UE according to one of claims 9 or 10, wherein the time resource unit is one or a combination of radio frames, slots or symbols.

12. The UE according to one of claims 1 to 11, wherein the circuitry, in operation, skips a measurement gap, MG, which is configured during the adapted measurement gap skipping time period;
optionally, wherein the circuitry, in operation, skips a complete measurement gap, which at least partially overlaps in time or which completely overlaps in time with the adapted measurement gap skipping time period; and
optionally, wherein the circuitry, in operation, only skips a part of a measurement gap, which overlaps in time with the adapted measurement gap skipping time period.

13. A base station comprising:
circuitry, which in operation,
generates configuration information for configuring a measurement gap skipping time period, wherein the measurement gap skipping time period is useable for determining occasions of skipping a measurement gap; and
adapts the configured measurement gap skipping time period to be aligned relative to an alignment boundary;
a transceiver, which in operation, transmits one or more signals conveying the configuration information.

14. The base station according to claim 13, wherein the circuitry, in operation, generates adaption information for adapting the configured measurement gap skipping time period to be aligned relative to the alignment boundary; and
wherein the transceiver, in operation, transmits one or more signals conveying the adaption information;
optionally, wherein the circuitry in operation, determines an offset parameter for aligning the configured measurement gap skipping time period relative to a boundary of a periodic transmission time period, and wherein the adaption information indicates the offset parameter;
optionally, wherein the circuitry in operation, determines a correction value for aligning the configured measurement gap skipping time period relative to a boundary of an overlapping periodic transmission time interval, and wherein the adaption information indicates the correction value;
optionally, wherein the circuitry in operation, determines a reference time resource unit for aligning the configured measurement gap skipping time period relative to a boundary defined by the time resource unit, and wherein the adaption information indicates the reference time resource unit;
optionally, wherein the circuitry in operation, determines boundaries defined by a time resource unit configuration for aligning the configured measurement gap skipping time period relative to the boundaries defined by the time resource unit configuration, and wherein the adaption information indicates the boundaries defined by the time resource unit configuration.

15. A method comprising the following steps performed by a user equipment, UE:
receiving one or more signals conveying configuration information for configuring a measurement gap skipping time period, wherein the measurement gap skipping time period is useable for determining occasions of skipping a measurement gap; and
adapting the configured measurement gap skipping time period to be aligned relative to an alignment boundary.
